(19) Europäisches Patentamt
European Patent Office
Office européen des brevets

(11) **EP 1 630 948 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(51) Int Cl.:
***H02P 9/00*** (2006.01)

(21) Anmeldenummer: **04020382.0**

(22) Anmeldetag: **27.08.2004**

(54) **Leistungsregelung für Drehfeldmaschinen**

Power regulation of AC Machines

Régulation de puissance des machines à courant alternatif

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**01.03.2006 Patentblatt 2006/09**

(73) Patentinhaber: **Woodward SEG GmbH & Co. KG**
**47906 Kempen (DE)**

(72) Erfinder: **Geniusz, Andrzej**
**47906 Kempen (DE)**

(74) Vertreter: **Cohausz & Florack**
**Patent- und Rechtsanwälte**
**Bleichstrasse 14**
**40211 Düsseldorf (DE)**

(56) Entgegenhaltungen:
WO-A-20/04107556     DE-C1- 4 032 056
US-A- 5 798 631     US-B1- 6 448 735

- **KRZEMINSKI Z: "Sensorless multiscalar control of double fed machine for wind power generators" 2. April 2002 (2002-04-02), POWER CONVERSION CONFERENCE, 2002. PCC-OSAKA 2002. PROCEEDINGS OF THE OSAKA, JAPAN 2-5 APRIL 2002, PISCATAWAY, NJ, USA, IEEE, US, PAGE(S) 334-339 , XP010590475 ISBN: 0-7803-7156-9 * das ganze Dokument ***

## Beschreibung

Gebiet der Erfindung

Die vorliegende Erfindung betrifft die Regelung der von einer Drehfeldmaschine abgegebenen oder aufgenommenen Wirk- und Blindleistung.

Hintergrund der Erfindung

Drehfeldmaschinen wie die Synchronmaschine und die Asynchronmaschine mit Käfig- oder Schleifringläufer werden in einer Vielzahl technischer Anwendungen sowohl im Motor- als auch im Generatorbetrieb eingesetzt. Beispielsweise werden in Anlagen zur dezentralen Erzeugung elektrischer Energie, wie z.B. Windkraftanlagen, Wellengeneratoren, Schwungmassenspeichern und Blockheizkraftwerken, Asynchron- und Synchrongeneratoren verwendet.

Bei nahezu konstanter Drehzahl sind Synchrongeneratoren und Asynchrongeneratoren mit Kurzschlussläufer prinzipiell in der Lage, die erzeugte elektrische Energie mit konstanter Spannung und Frequenz direkt an das Drehstromnetz abzugeben. Die Vorteile solcher Anlagen sind einfacher und robuster Aufbau, geringer Wartungsaufwand und hohe Zuverlässigkeit.

Drehzahlvariable Anlagen, wie z.B. die Asynchronmaschine mit Schleifringläufer, sind in der Lage, bei variabler Drehzahl des Generators eine angepasste elektrische Leistung abzugeben. Der Stator der Maschine ist mit dem Netz verbunden, und die Amplitude und Frequenz seiner Spannung wird von dem Netz vorgegeben. Dem Rotor wird eine variable Spannung mit variabler Amplitude und Frequenz durch einen Pulswechselrichter eingeprägt, der Bestandteil eines Umrichters ist. Durch Veränderung dieser dem Rotor aufgeprägten Dreiphasensystemspannung mit variabler Schlupffrequenz können dabei alle möglichen Betriebszustände (z.B. untersynchroner oder übersynchroner sowie motorischer und generatorischer Betrieb) eingestellt werden.

Zur Regelung von Drehfeldmaschinen wird üblicherweise die feldorientierte Regelung verwendet, wie beispielsweise in der EP 0 043 973 A1 dargestellt wird. Das Ziel der feldorientierten Regelung besteht darin, die Entkopplung von feld- und momentbildenden Komponenten des Stroms zu realisieren, d.h. dass das Drehmoment und der Magnetisierungsstrom (bzw. der Rotorfluss) unabhängig voneinander verstellbar sind. Dieses Verhalten ergibt sich bei Asynchronmaschinen mit Schleifringläufer dann, wenn der Rotorstrom auf den Rotorflussraumzeiger orientiert wird. Die Regelung findet hierbei in einem rotierenden Feldkoordinatensystem statt, wobei für die Koordinatentransformation der Rotorlagewinkel und die Position des Ständerspannungszeigers bekannt sein muss. Die Wirk- und Blindleistungen der Drehfeldmaschine können bei diesem Verfahren nur indirekt geregelt werden, es ist zudem ein dem Leistungsregelkreis unterlagerter Stromregelkreis in Form einer Kaskadenregelung erforderlich.

Im Gegensatz zur feldorientierten Regelung offenbart das Dokument "Sensorless Multiscalar Control of Double Fed Machine for Wind Power Generators" von Z. Krzeminski, veröffentlicht auf der IEEE Conference Power Conversion in Osaka, Japan, 2002, eine Leistungsregelung für eine doppeltgespeiste Asynchronmaschine, die der Regelung ein multiskalares Systemmodell zugrunde legt. Das Systemmodell basiert auf der Definition von Zustandsvariablen der Asynchronmaschine und zugehörigen Zustandsgleichungen (Differentialgleichungen) der Zustandsvariablen. Durch Verwendung von nichtlinearen Rückkopplungen werden die Zustandsgleichungen linearisiert und das Gesamtsystem in zwei lineare Teilsysteme, ein mechanisches und ein elektrisches, überführt. Die Regelung des mechanischen Teilsystems erfolgt über einen PI-Regler, der Sollgrößenabweichungen der Zustandsvariable, die sich als Kreuzprodukt (d.h. Vektorprodukt) von Statorfluss und Rotorstrom ergibt, ausregelt, während die Regelung des elektromagnetischen Teilsystems über einen PI-Regler erfolgt, der Sollgrößenabweichungen der Zustandsvariable, die sich als Skalarprodukt von Statorfluss und Rotorstrom ergibt, ausregelt. Zur Regelung der Wirk- und Blindleistungen ist es erforderlich, den Regelkreisen zur Regelung des mechanischen und elektromagnetischen Teilsystems jeweils einen Regelkreis zur Regelung der Wirk- und Blindleistung in Form einer Kaskadenregelung zu überlagern. Dabei stellt die Ausgangsgröße des Wirkleistungsreglers die Sollgröße für den mechanischen Regelkreis und die Ausgangsgröße des Blindleistungsreglers die Sollgröße für den elektromagnetischen Regelkreis dar.

Bei der Leistungsregelung nach Krzeminski wird die Regelung nicht mehr in einem rotierenden Feldkoordinatensystem durchgeführt, sondern kann in einem wicklungsfesten Koordinatensystem, also entweder in einem statorfesten order rotorfesten Koordinatensystem, erfolgen. Durch die Verwendung der Kreuz- und Skalarprodukte aus Statorfluss und Rotorstrom wird die Regelung in wicklungsfesten Koordinatensystemen möglich, da die Produkte die volle Information über die gegenseitige Lage von Statorflussvektor und Rotorstromvektor enthalten. Die nichtlineare Rückkopplung ermöglicht eine Linearisierung und damit eine Vereinfachung des mechanischen und elektromagnetischen Regelkreises.

Die Leistungsregelung von Krzeminski weist jedoch einige Nachteile auf. Die Parameter der Regelung hängen stark vom verwendeten Arbeitspunkt (z.B. der Drehzahl) ab, so dass die verwendeten Regler des Leistungsregelkreises und der unterlagerten mechanischen und elektromagnetischen Regelkreise bei unterschiedlichen Arbeitspunkten neu ausgelegt werden müssen. Zudem ist der Schlupfbereich der Regelung beschränkt. Schließlich ergibt sich keine zufriedenstellende Dynamik und Stabilität der Regelung.

Zusammenfassung der Erfindung

Es ist daher die Aufgabe der vorliegenden Erfindung, eine einfache und zugleich stabile Regelung der Wirk- und Blindleistung von Drehfeldmaschinen zu ermöglichen.

Zur Lösung dieser Aufgabe wird ein Verfahren vorgeschlagen zur Regelung der von einer Drehfeldmaschine abgegebenen oder aufgenommenen Wirk- und Blindleistung in einem wicklungsfesten Koordinatensystem, wobei in Abhängigkeit einer Sollgrößenabweichung der Wirkleistung mit einem ersten Regler eine erste Reglerausgangsgröße erzeugt wird und in Abhängigkeit einer Sollgrößenabweichung der Blindleistung mit einem zweiten Regler eine zweite Reglerausgangsgröße erzeugt wird, und wobei die erste und zweite Reglerausgangsgröße mit jeweiligen Rückkopplungsgrößen beaufschlagt werden, die Funktionen aus mindestens einer zeitveränderlichen Systemgröße der Drehfeldmaschine sind, dadurch gekennzeichnet, dass zumindest aus den mit den Rückkopplungsgrößen beaufschlagten ersten und zweiten Reglerausgangsgrößen ohne weitere Regelung eine Spannung oder ein Strom der Drehfeldmaschine als Stellgröße bestimmt wird.

Bei der Drehfeldmaschine kann es sich um eine Asynchronmaschine mit Käfigläufer oder Schleifringläufer oder um eine Synchronmaschine handeln, die jeweils als Motor oder Generator arbeiten können. Im Fall der Asynchronmaschine ist sowohl unter- als auch übersynchroner Betrieb möglich.

Zur Steuerung der Wirkleistung und der Blindleistung der Drehfeldmaschine wird jeweils eine Sollgröße für die Wirkleistung und eine Sollgröße für die Blindleistung vorgegeben und durch Vergleich mit den gemessenen Wirk- und Blindleistungen (Ist-Leistungen) eine eventuelle Sollgrößenabweichung ermittelt. Bei Sollgrößenabweichungen wird eine Spannung oder ein Strom der Drehfeldmaschine als Stellgröße der Regelung verändert, bis die Sollgrößenabweichungen verschwinden oder zumindest eine vorbestimmte Schwelle unterschreiten. Wenn es sich bei der Drehfeldmaschine um eine doppeltgespeiste Asynchronmaschine handelt, kann die Stellgröße beispielsweise die in den Rotor eingeprägte Spannung sein.

Die Regelung erfolgt in einem wicklungsfesten Koordinatensystem (statorfest oder rotorfest), was beispielsweise durch geeignete Wahl der Rückkopplungsgrößen erzielt werden kann. Im Gegensatz zur feldorientierten Regelung ist bei der Regelung der vorliegenden Erfindung also keine Information über die Raumzeigerlage von Strömen und Spannungen der Drehfeldmaschine (z.B. des Ständerspannungszeigers) bezogen auf ein bestimmtes Koordinatensystem erforderlich.

Gemäß der vorliegenden Erfindung wird nur ein Regler zur jeweiligen Regelung der Sollgrößenabweichung der Wirkleistung und der Sollgrößenabweichung der Blindleistung verwendet. Dabei kann es sich um einen linearen Regler, wie beispielsweise einen Proportional-Regler (P-Regler), einen Proportional-Integral-Regler (PI-Regler) mit linearen Integratoralgorithmus, einen Proportional-Differential-Regler (PD-Regler) oder einen Proportional-Integral-Differential-Regler (PID-Regler), oder auch einen nichtlinearen Regler, wie beispielsweise einen PI-Regler mit nichtlinearen Integratoralgorithmus, handeln; es können jedoch auch alle anderen Arten von Reglern eingesetzt werden. Dieser einfache Aufbau wird dadurch erreicht, dass als Zustandsvariablen, die der Regelung zugrunde liegen, direkt die Wirk- und Blindleistung gewählt werden. Dadurch kann auf weitere unterlagerte Regelkreise verzichtet werden. Weiterhin werden die ersten und zweiten Reglerausgangsgrößen mit Rückkopplungsgrößen beaufschlagt, die so gewählt werden, dass die Zustandsvariablen zumindest teilweise entkoppelt und eine Stabilisierung und Vereinfachung des Gesamtsystems erzielt wird.

Aus den mit den Rückkopplungsgrößen beaufschlagten ersten und zweiten Reglerausgangsgrößen, und gegebenenfalls noch weiteren Größen, wird dann mittels einer vorteilhafterweise vordefinierten Funktion eine Spannung oder ein Strom der Drehfeldmaschine als Stellgröße ermittelt, ohne dass dabei eine weitere Regelung der mit den Rückkopplungsgrößen beaufschlagten Reglerausgangsgrößen erforderlich ist. Es ist also insbesondere nicht mehr erforderlich, die Reglerausgangsgrößen durch die Verwendung weiterer Regler an Sollwerte irgendeiner Art anzugleichen.

Grundlage für die erfindungsgemäße Lösung ist der Ansatz einer multiskalaren Regelung, bei der im Gegensatz zum Stand der Technik jedoch direkt die Wirkleistung und die Blindleistung als Zustandsvariablen definiert werden. Dies führt bei der Synthese der Regelung zum Verzicht auf unterlagerte Regelkreise. Durch die Einführung der Rückkopplungsgrößen werden die ursprünglichen Zustandsgleichungen der Drehfeldmaschine so umgeformt, dass sich eine Stabilisierung und Vereinfachung der Zustandsgleichungen ergibt. Dabei werden die Rückkopplungsgrößen als Funktionen aus mindestens einer zeitveränderlichen Systemgröße der Drehfeldmaschine bestimmt, wobei besagte zeitveränderliche Systemgrößen beispielsweise durch Spannungen, Ströme oder Flüsse im Stator und/oder Rotor der Drehfeldmaschine oder die Rotordrehzahl repräsentiert werden. Die Rückkopplungsgrößen und die Parameter der Regler sind vorteilhafterweise aufeinander und auf das zu regelnde System abgestimmt.

Gemäß einer bevorzugten Ausführungsform der vorliegenden Erfindung sind die Regler (46-1, 46-2) lineare Regler.

Die Rückkopplungsgrößen, mit denen die ersten und zweiten Reglerausgangsgrößen der beiden Regler beaufschlagt werden, können so gewählt werden, dass das durch die Wahl der Wirk- und Blindleistungen als Zustandsvariablen an sich nichtlineare Gesamtsystem linearisiert wird.

Durch die Einführung derart gewählter Rückkopplungsgrößen werden die ursprünglichen Zustandsgleichungen der Drehfeldmaschine so umgeformt, dass die Zustandsgleichungen der Wirk- und Blindleistung linearisiert werden. Die linearisierten Zustandsgleichungen lassen sich dann als lineare Glieder in der Zustandsmatrix, die die Verknüpfung der Zustandsvariablen beschreibt, darstellen. Im einem besonders vorteilhaften Fall entsprechen die linearisierten Zustandsgleichungen für die Wirk- und Blindleistung beispielsweise jeweils einem Tiefpasssystem erster Ordnung. Die Zeitkonstanten dieser Tiefpasssysteme sind von der Zustandsmatrix des umgeformten Gesamtsystems abhängig. Zur Regelung der Wirk- und Blindleistung des umgeformten Systems können dann lineare Regler verwendet werden, wodurch eine kostengünstige, aber vor allem auch eine einfache und in weiten Grenzen stabile Regelung der Wirk- und Blindleistung bewerkstelligt werden kann.

Gemäß einer weiteren bevorzugten Ausführungsform der vorliegenden Erfindung sind die Regler PI-Regler. Der PI-Regler erzwingt das schnelle Verschwinden einer stationären Regelabweichung. Dabei können sowohl ideale als auch nicht-ideale PI-Regler verwendet werden. Die Zeitkonstanten der PI-Regler werden vorteilhafterweise unter Berücksichtigung des Einflusses der Rückkopplungsgrößen auf das Gesamtsystem gewählt.

Gemäß einer weiteren bevorzugten Ausführungsform der vorliegenden Erfindung wird als Stellgröße eine Rotorspannung der Drehfeldmaschine bestimmt. Bei der Drehfeldmaschine kann es sich dann beispielsweise um eine doppeltgespeiste Asynchronmaschine handeln.

Gemäß einer weiteren bevorzugten Ausführungsform der vorliegenden Erfindung wird als Stellgröße eine Statorspannung der Drehfeldmaschine bestimmt. Bei der Drehfeldmaschine kann es sich dann beispielsweise um eine Asynchronmaschine mit Käfigläufer handeln.

Gemäß einer weiteren bevorzugten Ausführungsform der vorliegenden Erfindung wird als Stellgröße ein Erregerstrom der Drehfeldmaschine bestimmt. Bei der Drehfeldmaschine kann es sich dann beispielsweise um eine fremderregte Synchronmaschine handeln.

Gemäß einer weiteren bevorzugten Ausführungsform der vorliegenden Erfindung wird bei der Berechnung der Rückkopplungsgrößen der Ohmsche Widerstand des Stators der Drehfeldmaschine vernachlässigt. Dadurch wird die Berechnung der Rückkopplungsgrößen stark vereinfacht. Eventuelle Ungenauigkeiten der Systemmodellierung durch die Vernachlässigung des Statorwiderstandes werden vorteilhafterweise durch den Regelkreis ausgeglichen.

Gemäß einer weiteren bevorzugten Ausführungsform der vorliegenden Erfindung wird bei der Berechnung der Rückkopplungsgrößen von einem stationären Zustand ausgegangen. Auch durch diese Maßnahme wird die Berechnung der Rückkopplungsgrößen stark vereinfacht. Eventuelle Ungenauigkeiten der Systemmodellierung durch die Annahme eines stationären Zustandes werden vorteilhafterweise durch den Regelkreis ausgeglichen.

Gemäß einer weiteren bevorzugten Ausführungsform der vorliegenden Erfindung wird die Wirk- und Blindleistung des Stators der Drehfeldmaschine geregelt.

Gemäß einer weiteren bevorzugten Ausführungsform der vorliegenden Erfindung wird die Wirk- und Blindleistung des Netzes, an das die Drehfeldmaschine angeschlossen ist, geregelt.

Gemäß einer weiteren bevorzugten Ausführungsform der vorliegenden Erfindung wird die erste Reglerausgangsgröße mit einer Rückkopplungsgröße beaufschlagt, die dem Kreuzprodukt von Rotorspannung und Statorfluss der Drehfeldmaschine entspricht, und die zweite Reglerausgangsgröße wird mit einer Rückkopplungsgröße beaufschlagt, die dem Skalarprodukt von Rotorspannung und Statorfluss entspricht. Die Kreuz- und Skalarprodukte müssen dabei nicht notwendigerweise direkt aus der Rotorspannung und dem Statorfluss berechnet werden, es ist auch eine indirekte Berechnung der Rückkopplungsgrößen über Funktionen der Systemgrößen der Drehfeldmaschine möglich, die den Kreuz- und Skalarprodukten entsprechen. Die Wahl der Rückkopplungsgrößen gemäß dieser bevorzugten Ausführungsform der vorliegenden Erfindung eignet sich besonders für eine doppeltgespeiste Asynchronmaschine, bei der die Rotorspannung als Stellgröße der Regelung verwendet wird.

Durch die Verwendung von Kreuzprodukt und Skalarprodukt von Rotorspannung und Statorfluss in der erfindungsgemäßen Regelung wird es möglich, auf die Information über die Raumzeigerlagen bezogen auf ein bestimmtes Koordinatensystem zu verzichten und trotz Nichtlinearität des ursprünglichen Systems eine einfache Reglersynthese zu ermöglichen. Physikalisch hängt der Zustand der Maschine von der gegenseitigen Lage der Raumzeiger ab, die zur Beschreibung der Dynamik gewählt worden sind. Die Zusammenhänge zwischen Raumzeigern lassen sich jedoch auch ohne getrennte Winkelinformation durch Kreuz- und Skalarprodukt beschreiben. Der Entwurf der Regelung kann dann in jedem beliebigen wicklungsfesten Koordinatensystem (z.B. statorfest oder rotorfest) stattfinden.

Gemäß einer weiteren bevorzugten Ausführungsform der vorliegenden Erfindung sind die Rückkopplungsgrößen Funktionen zumindest der Statorspannung, des Statorflusses, des Rotorstroms und der Rotordrehzahl. Die Rückkopplungsgrößen können im allgemeinen nicht direkt über die Kreuz- und Skalarprodukte aus Rotorspannung und Statorfluss berechnet werden, da die Rotorspannung als Stellgröße dient. Aus den die Zustandsvariablen der Drehfeldmaschine beschreibenden Zustandsgleichungen können die Rückkopplungsgrößen jedoch als Funktionen aus zumindest der Statorspannung, dem Statorfluss, dem Rotorstrom und der Rotordrehzahl hergeleitet werden. Diese Funktionen können zusätzlich von den Induktivitäten der Drehfeldmaschine und dem Statorwiderstand abhängen. Die Abhängigkeit der Rückkopplungsgrößen von Statorspannung, Statorfluss, Rotorstrom und Rotordrehzahl ergibt sich beispielsweise im Fall der doppeltgespeisten Asynchronmaschine bei Verwendung der Rotorspannung als Stellgröße der Regelung.

Gemäß einer weiteren bevorzugten Ausführungsform der vorliegenden Erfindung wird die Rotorspannung der Drehfeldmaschine als Stellgröße ohne weitere Regelung aus den mit den Rückkopplungsgrößen beaufschlagten ersten und zweiten Reglerausgangsgrößen und dem Statorfluss bestimmt. Eine derartige Vorgehensweise ist insbesondere bei einer doppeltgespeisten Asynchronmaschine vorteilhaft.

Gemäß einer weiteren bevorzugten Ausführungsform der vorliegenden Erfindung wird zumindest die Statorspannung und der Rotorstrom der Drehfeldmaschine gemessen. Eine derartige Vorgehensweise ist insbesondere bei einer doppeltgespeisten Asynchronmaschine vorteilhaft. Die Messung kann dabei beispielsweise in natürlichen dreiphasigen Koordinaten erfolgen und die Messgrößen können anschließend in ein zweiphasiges Koordinatensystem transformiert werden.

Gemäß einer weiteren bevorzugten Ausführungsform der vorliegenden Erfindung wird der Statorstrom der Drehfeldmaschine gemessen. Falls kein Lagegeber zur Messung des Rotorlagewinkels und der Rotordrehzahl vorhanden ist, kann die Messung des Statorstroms erforderlich sein, um eine Berechnung von Rotorlagewinkel und Rotordrehzahl zu ermöglichen.

Gemäß einer weiteren bevorzugten Ausführungsform der vorliegenden Erfindung wird die Rotordrehzahl der Drehfeldmaschine gemessen oder aus der Statorspannung, dem Statorstrom und dem Rotorstrom der Drehfeldmaschine bestimmt. Die Messung der Rotordrehzahl kann beispielsweise über einen Lagegeber erfolgen.

Gemäß einer weiteren bevorzugten Ausführungsform der vorliegenden Erfindung wird der Rotorlagewinkel der Drehfeldmaschine gemessen oder aus der Statorspannung, dem Statorstrom und dem Rotorstrom der Drehfeldmaschine bestimmt. Die Messung des Rotorlagewinkels kann beispielsweise über einen Lagegeber erfolgen.

Gemäß einer weiteren bevorzugten Ausführungsform der vorliegenden Erfindung wird der Statorfluss der Drehfeldmaschine aus der Statorspannung und der Kreisfrequenz der Statorspannung der Drehfeldmaschine berechnet.

Gemäß einer weiteren bevorzugten Ausführungsform der vorliegenden Erfindung werden Spannungen und Ströme der Drehfeldmaschine jeweils gemessen und dann in ein zweiphasiges Koordinatensystem transformiert, und die Stellgröße wird in einem zweiphasigen Koordinatensystem bestimmt und dann in ein dreiphasiges Koordinatensystem transformiert. Die Spannungen und Ströme der Drehfeldmaschine werden dabei als natürliche dreiphasige Größen gemessen.

Gemäß einer weiteren bevorzugten Ausführungsform der vorliegenden Erfindung ist die Drehfeldmaschine eine doppeltgespeiste Asynchronmaschine, deren Stator direkt mit einem Netz verbunden ist, und deren Rotor mit einem Umrichter verbunden ist. Der Umrichter kann dabei zwei Pulswechselrichter und einen Zwischenkreis enthalten, einer der Pulswechselrichter kann mit dem Rotor verbunden sein, und der andere Pulswechselrichter kann mit dem Netz verbunden sein. Die Drehfeldmaschine kann jedoch ebenso eine Asynchronmaschine mit Käfigläufer oder eine Synchronmaschine sein.

Zur Lösung der Aufgabe der Erfindung wird ferner ein Computerprogramm vorgeschlagen mit Befehlen, deren Ausführung einen Prozessor veranlasst, das oben beschriebene Regelverfahren durchzuführen. Das vorgestellte Regelverfahren eignet sich sehr gut zur Implementierung auf einem Prozessor, der beispielsweise als Eingangsgrößen die Sollgrößenabweichungen und die Rückkopplungsgrößen erhält und als Ausgangsgröße die Stellgröße ausgibt. Auch die Berechnung der Rückkopplungsgrößen kann innerhalb des Programms implementiert sein, wenn der Prozessor mit den erforderlichen Messwerten der Ströme, Spannungen, Flüsse und Winkelgeschwindigkeit der Drehfeldmaschine versorgt wird. Das Computerprogramm kann beispielsweise bei Inbetriebnahme der Drehfeldmaschine in den Hauptspeicher des Prozessors geladen und dann ausgeführt werden. Eine nachträgliche Anpassung der Parameter der Regler oder gegebenenfalls der Rückkopplungsgrößen ist vorteilhafterweise möglich.

Zur Lösung der Aufgabe der Erfindung wird ferner ein Computerprogrammprodukt vorgeschlagen, das ein Computerprogramm enthält mit Befehlen, deren Ausführung einen Prozessor veranlasst, das oben beschriebene Regelverfahren durchzuführen. Das Computerprogrammprodukt kann beispielsweise ein Wechseldatenträger, wie z.B. eine Speicherkarte, eine Diskette oder eine CD sein, auf der ein Computerprogramm mit den Befehlen zur Ausführung des Regelverfahrens abgespeichert ist.

Zur Lösung der Aufgabe der Erfindung wird ferner eine Vorrichtung vorgeschlagen zur Regelung der von einer Drehfeldmaschine abgegebenen oder aufgenommenen Wirk- und Blindleistung in einem wicklungsfesten Koordinatensystem, mit einem ersten Regler zur Erzeugung einer ersten Reglerausgangsgröße bei Sollgrößenabweichungen der Wirkleistung, mit einem zweiten Regler zur Erzeugung einer zweiten Reglerausgangsgröße bei Sollgrößenabweichungen der Blindleistung, und mit Mitteln zur Beaufschlagung der ersten und zweiten Reglerausgangsgröße mit jeweiligen Rückkopplungsgrößen, die sich als Funktionen aus mindestens einer zeitveränderlichen Systemgröße der Drehfeldmaschine ergeben, dadurch gekennzeichnet, dass die Vorrichtung Mittel zur Bestimmung einer Spannung oder eines Stroms der Drehfeldmaschine als Stellgröße aus zumindest den mit den Rückkopplungsgrößen beaufschlagten ersten und zweiten Reglerausgangsgrößen ohne weitere Regelung umfasst.

Die Vorrichtung gemäß der vorliegenden Erfindung kann beispielsweise eine modulare Reglereinheit mit Schnittstellen zur Eingabe von Sollgrößenabweichungen und Messgrößen und zur Ausgabe der Stellgrößen sein. Alternativ kann die Vorrichtung fest in die Drehfeldmaschine integriert sein. Die Vorrichtung benötigt aufgrund der geeigneten Wahl der Rückkopplungsgrößen lediglich einen Regler zur Regelung der Wirkleistung und einen Regler zur Regelung der Blindleistung, wobei die Reglerausgangsgrößen nach Beaufschlagung mit den entsprechenden Rückkopplungsgrößen zur Bestimmung der Stellgröße der Regelung kombiniert werden.

Gemäß einer bevorzugten Ausführungsform der vorliegenden Erfindung sind die Regler lineare Regler.

Gemäß einer weiteren bevorzugten Ausführungsform der vorliegenden Erfindung sind die Regler PI-Regler.

Gemäß einer weiteren bevorzugten Ausführungsform der vorliegenden Erfindung bestimmt das Mittel zur Bestimmung einer Spannung oder eines Stroms der Drehfeldmaschine eine Rotorspannung als Stellgröße.

Gemäß einer weiteren bevorzugten Ausführungsform der vorliegenden Erfindung bestimmt das Mittel zur Bestimmung einer Spannung oder eines Stroms der Drehfeldmaschine eine Statorspannung als Stellgröße.

Gemäß einer weiteren bevorzugten Ausführungsform der vorliegenden Erfindung bestimmt das Mittel zur Bestimmung einer Spannung oder eines Stroms der Drehfeldmaschine einen Erregerstrom als Stellgröße.

Gemäß einer weiteren bevorzugten Ausführungsform der vorliegenden Erfindung wird die Wirk- und Blindleistung des Stators der Drehfeldmaschine geregelt.

Gemäß einer weiteren bevorzugten Ausführungsform der vorliegenden Erfindung wird die Wirk- und Blindleistung des Netzes, an das die Drehfeldmaschine angeschlossen ist, geregelt.

Gemäß einer weiteren bevorzugten Ausführungsform der vorliegenden Erfindung wird die Reglerausgangsgröße des ersten Reglers mit einer Rückkopplungsgröße beaufschlagt, die dem Kreuzprodukt von Rotorspannung und Statorfluss der Drehfeldmaschine entspricht, und die Reglerausgangsgröße des zweiten Reglers wird mit einer Rückkopplungsgröße beaufschlagt, die dem Skalarprodukt von Rotorspannung und Statorfluss entspricht.

Gemäß einer weiteren bevorzugten Ausführungsform der vorliegenden Erfindung sind die Rückkopplungsgrößen Funktionen der Statorspannung, des Statorflusses, des Rotorstroms und der Winkelgeschwindigkeit des Rotors.

Gemäß einer weiteren bevorzugten Ausführungsform der vorliegenden Erfindung wird die Rotorspannung der Drehfeldmaschine als Stellgröße aus den mit den Rückkopplungsgrößen beaufschlagten ersten und zweiten Reglerausgangsgrößen und dem Statorfluss ohne weitere Regelung bestimmt.

Gemäß einer weiteren bevorzugten Ausführungsform der vorliegenden Erfindung umfasst die Vorrichtung Mittel zur Messung der Statorspannung und des Rotorstroms der Drehfeldmaschine.

Gemäß einer weiteren bevorzugten Ausführungsform der vorliegenden Erfindung umfasst die Vorrichtung Mittel zur Messung des Statorstroms.

Gemäß einer weiteren bevorzugten Ausführungsform der vorliegenden Erfindung umfasst die Vorrichtung Mittel zur Messung der Rotordrehzahl der Drehfeldmaschine oder zu deren Bestimmung aus der Statorspannung, dem Statorstrom und dem Rotorstrom der Drehfeldmaschine.

Gemäß einer weiteren bevorzugten Ausführungsform der vorliegenden Erfindung umfasst die Vorrichtung Mittel zur Messung des Rotorlagewinkels der Drehfeldmaschine oder zu dessen Bestimmung aus der Statorspannung, dem Statorstrom und dem Rotorstrom der Drehfeldmaschine.

Gemäß einer weiteren bevorzugten Ausführungsform der vorliegenden Erfindung umfasst die Vorrichtung Mittel zur Messung der Spannungen und Ströme der Drehfeldmaschine und zu deren Transformation in ein zweiphasiges Koordinatensystem, und Mittel zur Transformation der in einem zweiphasigen Koordinatensystem bestimmten Stellgröße in ein dreiphasiges Koordinatensystem.

Gemäß einer weiteren bevorzugten Ausführungsform der vorliegenden Erfindung ist die Drehfeldmaschine eine doppeltgespeiste Asynchronmaschine, deren Stator direkt mit einem Netz verbunden ist, und deren Rotor mit einem Umrichter verbunden ist.

Zur Lösung der Aufgabe der Erfindung wird ferner eine Drehfeldmaschine vorgeschlagen mit einer Vorrichtung zur Regelung der von der Drehfeldmaschine abgegebenen oder aufgenommenen Wirk- und Blindleistung in einem wicklungsfesten Koordinatensystem gemäß den oben bereits beschriebenen Vorrichtungsmerkmalen.

Die Drehfeldmaschine kann dabei sowohl eine Asynchronmaschine mit Käfig- oder Schleifringläufer als auch eine Synchronmaschine sein.

Diese und weitere Aspekte der vorliegenden Erfindung werden anhand der nun folgenden detaillierten Beschreibung der bevorzugten Ausführungsformen verdeutlicht werden.

<u>Kurze Beschreibung der Figuren</u>

In den Figuren zeigen:

Fig. 1:     eine schematische Darstellung einer doppeltgespeisten Asynchronmaschine an einem Drehstromnetz;

Fig. 2: eine schematische Darstellung der erfindungsgemäßen Regelung der Wirk- und Blindleistung der doppeltgespeisten Asynchronmaschine nach Fig. 1; und

Fig. 3: eine schematische Darstellung der Messgrößenverarbeitungseinheit 44 aus Fig. 2.

Ausführliche Beschreibung der Erfindung

Die vorliegende Erfindung betrifft die Regelung der Wirk- und Blindleistung von Drehfeldmaschinen. Diese Regelung wird im folgenden am Beispiel einer doppeltgespeisten Asynchronmaschine mit Umrichter im Rotorkreis erläutert. Die erfindungsgemäße Regelung eignet sich jedoch gleichermaßen auch für andere Drehfeldmaschinen, insbesondere für Asynchronmaschinen mit Käfigläufer und Vollumrichter im Statorkreis und für Synchronmaschinen.

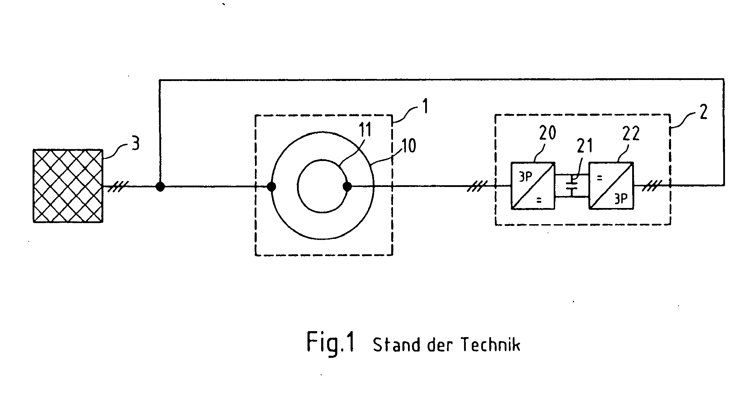

Fig. 1 zeigt eine derartige Asynchronmaschine 1, die aus einem Stator (Ständer) 10 und einem Rotor (Läufer) 11 besteht. Der Rotor wird direkt oder über ein Getriebe mit einer Antriebswelle verbunden und kann dadurch wahlweise mechanische Leistung aufnehmen (Generatorbetrieb) oder abgeben (Motorbetrieb).

Der Stator 10 der Asynchronmaschine 1 gemäß Fig. 1 ist direkt mit einem Drehstromnetz 3 verbunden, während der Rotor 11 über einen Umrichter 2 an das Drehstromnetz 3 angeschlossen ist. Der Umrichter 2 besteht aus einem netzseitigen Pulswechselrichter 22 und einem maschinenseitigen Pulswechselrichter 20. Zur Entkopplung der beiden Pulswechselrichter 20 und 22 ist im Zwischenkreis ein Kondensator 21 vorgesehen, so dass die Schlupfleistungen in beide Richtungen über den Umrichter 2 übertragen werden können. Aufgrund der festen Verbindung des Stators 10 mit dem Drehstromnetz 3 ist die Statorspannung im allgemeinen durch das Netz vorgegeben (nach Amplitude und Frequenz), eine Ausnahme bilden hier die Inselnetze. Dem Rotor 11 wird eine variable Spannung mit variabler Frequenz durch den Pulswechselrichter 20 eingeprägt, wodurch verschiedene Betriebszustände (untersynchroner/übersynchroner Betrieb und motorischer/generatorischer Betrieb) eingestellt werden können. Über die Einprägung der Rotorspannung kann dementsprechend auch die Aufnahme oder Abgabe von Wirkleistung und Blindleistung der Asynchronmaschine 1 gesteuert werden.

Das mathematische Modell der Asynchronmaschine 1 gemäß Fig. 1 lässt sich in der folgenden allgemeinen Form darstellen:

$$\mathbf{u}_s = R_s \mathbf{i}_s + \frac{d\psi_s}{d\tau} + j\omega_a \psi_s \, , \qquad (1)$$

$$\mathbf{u}_r = R_r \mathbf{i}_r + \frac{d\psi_r}{d\tau} + j(\omega_a - \omega_r)\psi_r \, , \qquad (2)$$

$$J\frac{d\omega_r}{d\tau} = \mathrm{Im}\left|\psi_s \mathbf{i}_s\right| - m_0 \, . \qquad (3)$$

Dabei sind $\psi_r$ und $\psi_s$ die Stator- und Rotorflussvektoren, $\mathbf{i}_s$ und $\mathbf{i}_r$ die Stator- und Rotorstromvektoren, $\mathbf{u}_s$ und $\mathbf{u}_r$ die Stator- und Rotorspannungsvektoren, $R_s$ und $R_r$ die Stator- und Rotorwicklungswiderstände, $m_0$ das Drehmoment, $J$ das Trägheitsmoment, $\omega_r$ die Rotordrehzahl, $\omega_a$ die Drehgeschwindigkeit des Bezugskoordinatensystems und $\tau$ ist die relative Zeit. Fettgedruckte Buchstaben bezeichnen hier und im folgenden vektorielle Größen, während kursiv gedruckte Buchstaben hier und im folgenden skalare Größen bezeichnen.

Zwischen den Strömen und Flussverkettungen besteht folgender Zusammenhang:

$$\mathbf{i}_s = \frac{1}{L_s}\psi_s - \frac{L_m}{L_r}\mathbf{i}_r \, , \qquad (4)$$

$$\mathbf{i}_r = \frac{1}{L_r}\psi_r - \frac{L_m}{L_r}\mathbf{i}_s \, , \qquad (5)$$

wobei $L_s$, $L_r$ und $L_m$ die Statorinduktivität, die Rotorinduktivität und die Gegeninduktivität bezeichnet.

Das Umformen der Gleichungen (1) bis (5) führt zu einer günstigen Form der Differentialgleichung der Asynchronmaschine:

$$\frac{d\psi_{s\alpha S}}{d\tau} = -\frac{R_s}{L_s}\psi_{s\alpha S} + R_s\frac{L_m}{L_s}i_{r\alpha S} + u_{s\alpha S} \; , \tag{6}$$

$$\frac{d\psi_{s\beta S}}{d\tau} = -\frac{R_s}{L_s}\psi_{s\beta S} + R_s\frac{L_m}{L_s}i_{r\beta S} + u_{s\beta S} \; , \tag{7}$$

$$\frac{di_{r\alpha S}}{d\tau} = -\frac{L_s^2 R_r + L_m^2 R_s}{L_s w_\sigma}i_{r\alpha S} + \frac{R_s L_m}{L_s w_\sigma}\psi_{s\alpha S} - \frac{L_m}{w_\sigma}\omega_r\psi_{s\beta S} + \frac{L_s}{w_\sigma}u_{r\alpha S} - \frac{L_m}{w_\sigma}u_{s\alpha S} \; , \tag{8}$$

$$\frac{di_{r\beta S}}{d\tau} = -\frac{L_s^2 R_r + L_m^2 R_s}{L_s w_\sigma}i_{r\beta S} + \frac{R_s L_m}{L_s w_\sigma}\psi_{s\beta S} + \frac{L_m}{w_\sigma}\omega_r\psi_{s\beta S} + \frac{L_s}{w_\sigma}u_{r\beta S} - \frac{L_m}{w_\sigma}u_{s\beta S} \; , \tag{9}$$

$$\frac{d\omega_r}{d\tau} = \frac{L_m}{JL_s}\left(\psi_{s\alpha S}i_{r\beta S} - \psi_{s\beta S}i_{r\alpha S}\right) - \frac{1}{J}m_0 \; . \tag{10}$$

Dabei ist die Variable $w_\sigma$ definiert als

$$w_\sigma = L_s L_r - L_m^2 \; . \tag{11}$$

In den Gleichungen (6) bis (10) und im folgenden bezeichnet der erste Index jeweils den Ort (r: Rotor, s: Stator), der zweite Index gibt die jeweilige Komponente in einem zweiphasigen Koordinatensystem an ($\alpha$, $\beta$), und der dritte Index bezeichnet das verwendete Bezugssystem (S: Statorwicklungsfest, R: Rotorwicklungsfest).

Die vorliegende Erfindung geht von folgender Wahl der Zustandsvariablen zur Beschreibung des Zustands der Asynchronmaschine aus:

- Rotordrehzahl $\omega_r$,

- Statorwirkleistung $p_s$,

- Statorblindleistung $q_s$ und

- Quadrat des Statorflusses $\psi_{sS}^2 = \left|\psi_{sS}\right|^2$ .

Für die Rotordrehzahl $\omega_r$ gilt die Beziehung:

$$\frac{d\omega_r}{d\tau} = \frac{L_m}{JL_s}\left(\psi_{s\alpha S}i_{r\beta S} - \psi_{s\beta S}i_{r\alpha S}\right) - \frac{1}{J}m_0 \; . \tag{12}$$

Die Momentanwerte der Generatorleistung lassen sich mittels der Gleichungen (13) und (14) beschreiben:

$$p_s = u_{s\alpha S} i_{s\alpha S} + u_{s\beta S} i_{s\beta S} \, , \tag{13}$$

$$q_s = -u_{s\alpha S} i_{s\beta S} + u_{s\beta S} i_{s\alpha S} \, . \tag{14}$$

Unter der Annahme eines stationären Zustandes lassen sich die Generatorleistungen wie folgt darstellen:

$$P_s = \frac{1}{L_s}\left(u_{s\alpha S}\psi_{s\alpha S} + u_{s\beta S}\psi_{s\beta S}\right) -$$
$$-\frac{L_m}{L_s}\frac{\left(u_{s\beta S}\psi_{s\alpha S} - u_{s\alpha S}\psi_{s\beta S}\right)\left(\psi_{s\alpha S}i_{r\beta S} - \psi_{s\beta S}i_{r\alpha S}\right)}{\psi_{sS}^2} +$$
$$+\frac{L_m}{L_s}\frac{\left(u_{s\alpha S}\psi_{s\alpha S} + u_{s\beta S}\psi_{s\beta S}\right)\left(\psi_{s\alpha S}i_{r\alpha S} + \psi_{s\beta S}i_{r\beta S}\right)}{\psi_{sS}^2} \tag{15}$$

$$Q_s = -\frac{1}{L_s}\left(u_{s\beta S}\psi_{s\alpha S} - u_{s\alpha S}\psi_{s\beta S}\right) -$$
$$-\frac{L_m}{L_s}\frac{\left(u_{s\beta S}\psi_{s\alpha S} - u_{s\alpha S}\psi_{s\beta S}\right)\left(\psi_{s\alpha S}i_{r\alpha S} + \psi_{s\beta S}i_{r\beta S}\right)}{\psi_{sS}^2} +$$
$$+\frac{L_m}{L_s}\frac{\left(u_{s\alpha S}\psi_{s\alpha S} + u_{s\beta S}\psi_{s\beta S}\right)\left(\psi_{s\alpha S}i_{r\beta S} - \psi_{s\beta S}i_{r\alpha S}\right)}{\psi_{sS}^2} \tag{16}$$

Durch Differenzieren der Gleichungen (15) und (16) und durch Einsetzen der Gleichungen (6), (7), (8) und (9) erhält man nach Vereinfachung folgende Differentialgleichungen:

$$\frac{dp_s}{d\tau} = -\frac{1}{T_v}p_s - \frac{L_s}{L_m}\frac{\psi_{sS}^2}{\left(u_{s\beta S}\psi_{s\alpha S} - u_{s\alpha S}\psi_{s\beta S}\right)}\left[-\frac{1}{T_v}\frac{u_{s\alpha S}\psi_{s\alpha S} + u_{s\beta S}\psi_{s\beta S}}{L_m\left(u_{s\beta S}\psi_{s\alpha S} - u_{s\alpha S}\psi_{s\beta S}\right)}\psi_{sS}^2 + \right.$$
$$+\frac{1}{T_v}\frac{u_{s\alpha S}\psi_{s\alpha S} + u_{s\beta S}\psi_{s\beta S}}{u_{s\beta S}\psi_{s\alpha S} - u_{s\alpha S}\psi_{s\beta S}}\left(\psi_{s\alpha S}i_{r\alpha S} + \psi_{s\beta S}i_{r\beta S}\right) + \omega_r\left(\psi_{s\alpha S}i_{r\alpha S} + \psi_{s\beta S}i_{r\beta S}\right) +$$
$$+\omega_r\frac{L_m}{w_\sigma}\psi_{sS}^2 + \frac{L_s}{w_\sigma}\left(u_{r\beta S}\psi_{s\alpha S} - u_{r\alpha S}\psi_{s\beta S}\right) - \frac{L_m}{w_\sigma}\left(u_{s\beta S}\psi_{s\alpha S} - u_{s\alpha S}\psi_{s\beta S}\right) +$$
$$\left. + u_{s\alpha S}i_{r\beta S} - u_{s\beta S}i_{r\alpha S}\right] \tag{17}$$

$$\frac{dq_s}{d\tau} = -\frac{1}{T_v}q_s - \frac{L_s}{L_m}\frac{\psi_{sS}^2}{\left(u_{s\beta S}\psi_{s\alpha S} - u_{s\alpha S}\psi_{s\beta S}\right)}\left[-\frac{1}{T_v}\frac{\psi_{sS}^2}{L_m} + \right.$$

$$+\frac{1}{T_v}\frac{u_{s\alpha S}\psi_{s\alpha S} + u_{s\beta S}\psi_{s\beta S}}{u_{s\beta S}\psi_{s\alpha S} - u_{s\alpha S}\psi_{s\beta S}}\left(\psi_{s\alpha S}i_{r\beta S} - \psi_{s\beta S}i_{r\alpha S}\right) + \frac{R_s L_m}{L_s w_\sigma}\psi_{sS}^2 + \frac{R_s L_m}{L_s}i_{sS}^2 -$$

$$-\omega_r\left(\psi_{s\alpha S}i_{r\beta S} - \psi_{s\beta S}i_{r\alpha S}\right) + \frac{L_s}{w_\sigma}\left(u_{r\alpha S}\psi_{s\alpha S} + u_{r\beta S}\psi_{s\beta S}\right) -$$

$$\left.-\frac{L_m}{w_\sigma}\left(u_{s\alpha S}\psi_{s\alpha S} + u_{s\beta S}\psi_{s\beta S}\right) + u_{s\alpha S}i_{r\alpha S} + u_{s\beta S}i_{r\beta S}\right] \tag{18}$$

Dabei ist

$$T_v = \frac{w_\sigma}{R_s L_s + R_s L_r} \ . \tag{18a}$$

Das Quadrat des Betrages des Statorflusses kann wie folgt berechnet werden:

$$\psi_{sS}^2 = \psi_{s\alpha S}^2 + \psi_{s\beta S}^2 \ . \tag{19}$$

Durch Differenzieren von Gleichung (19) und durch Einsetzen der Gleichungen (6) und (7) erhält man folgende Differentialgleichung:

$$\frac{d\left(\psi_{sS}^2\right)}{d\tau} = -2\frac{R_s}{L_s}\psi_{sS}^2 + 2\frac{R_s L_m}{L_s}\left(\psi_{s\alpha S}i_{r\alpha S} + \psi_{s\beta S}i_{r\beta S}\right) + 2\left(u_{s\alpha S}\psi_{s\alpha S} + u_{s\beta S}\psi_{s\beta S}\right) \tag{20}$$

Die vier Zustandsgleichungen des Systems, basierend auf der Wahl der vier Zustandsvariablen gemäß der vorliegenden Erfindung, können dann wie folgt zusammengefasst werden:

$$\frac{d\omega_r}{d\tau} = \frac{L_m}{JL_s}\left(\psi_{s\alpha S}i_{r\beta S} - \psi_{s\beta S}i_{r\alpha S}\right) - \frac{1}{J}m_0 \ , \tag{21}$$

$$\frac{dp_s}{d\tau} = -\frac{1}{T_v}p_s - \frac{L_s}{L_m}\frac{\psi_{sS}^2}{\left(u_{s\beta S}\psi_{s\alpha S} - u_{s\alpha S}\psi_{s\beta S}\right)}\left[-\frac{1}{T_v}\frac{u_{s\alpha S}\psi_{s\alpha S} + u_{s\beta S}\psi_{s\beta S}}{L_m\left(u_{s\beta S}\psi_{s\alpha S} - u_{s\alpha S}\psi_{s\beta S}\right)}\psi_{sS}^2 + \right.$$

$$+\frac{1}{T_v}\frac{u_{s\alpha S}\psi_{s\alpha S} + u_{s\beta S}\psi_{s\beta S}}{u_{s\beta S}\psi_{s\alpha S} - u_{s\alpha S}\psi_{s\beta S}}\left(\psi_{s\alpha S}i_{r\alpha S} + \psi_{s\beta S}i_{r\beta S}\right) + \omega_r\left(\psi_{s\alpha S}i_{r\alpha S} + \psi_{s\beta S}i_{r\beta S}\right) +$$

$$+\omega_r\frac{L_m}{w_\sigma}\psi_{sS}^2 + \frac{L_s}{w_\sigma}\left(u_{r\beta S}\psi_{s\alpha S} - u_{r\alpha S}\psi_{s\beta S}\right) - \frac{L_m}{w_\sigma}\left(u_{s\beta S}\psi_{s\alpha S} - u_{s\alpha S}\psi_{s\beta S}\right) +$$

$$\left. + u_{s\alpha S}i_{r\beta S} - u_{s\beta S}i_{r\alpha S}\right]$$

(22)

$$\frac{dq_s}{d\tau} = -\frac{1}{T_v}q_s - \frac{L_s}{L_m}\frac{\psi_{sS}^2}{\left(u_{s\beta S}\psi_{s\alpha S} - u_{s\alpha S}\psi_{s\beta S}\right)}\left[-\frac{1}{T_v}\frac{\psi_{sS}^2}{L_m} + \right.$$

$$+\frac{1}{T_v}\frac{u_{s\alpha S}\psi_{s\alpha S} + u_{s\beta S}\psi_{s\beta S}}{u_{s\beta S}\psi_{s\alpha S} - u_{s\alpha S}\psi_{s\beta S}}\left(\psi_{s\alpha S}i_{r\beta S} - \psi_{s\beta S}i_{r\alpha S}\right) + \frac{R_s L_m}{L_s w_\sigma}\psi_{sS}^2 + \frac{R_s L_m}{L_s}i_{sS}^2 -$$

$$-\omega_r\left(\psi_{s\alpha S}i_{r\beta S} - \psi_{s\beta S}i_{r\alpha S}\right) + \frac{L_s}{w_\sigma}\left(u_{r\alpha S}\psi_{s\alpha S} + u_{r\beta S}\psi_{s\beta S}\right) -$$

$$\left. -\frac{L_m}{w_\sigma}\left(u_{s\alpha S}\psi_{s\alpha S} + u_{s\beta S}\psi_{s\beta S}\right) + u_{s\alpha S}i_{r\alpha S} + u_{s\beta S}i_{r\beta S}\right]$$

(23)

$$\frac{d\left(\psi_{sS}^2\right)}{d\tau} = -2\frac{R_s}{L_s}\psi_{sS}^2 + 2\frac{R_s L_m}{L_s}\left(\psi_{s\alpha S}i_{r\alpha S} + \psi_{s\beta S}i_{r\beta S}\right) + 2\left(u_{s\alpha S}\psi_{s\alpha S} + u_{s\beta S}\psi_{s\beta S}\right).$$

(24)

Durch die erfindungsgemäße Wahl von Rotordrehzahl $\omega_r$, Statorwirkleistung $p_s$, Statorblindleistung $q_s$ und

Quadrat des Statorflusses $\psi_{sS}^2$ als Zustandsvariablen kann die erfindungsgemäße Regelung der Wirk- und Blindleistung mit lediglich zwei Reglern, einem für die Wirkleistung, und einem für die Blindleistung, erfolgen, da die Wirk- und Blindleistung unmittelbare Zustandsvariablen sind. Daher kann auf unterlagerte Regelkreise verzichtet werden, und ein besonders einfacher Aufbau der Regelung wird möglich. Ferner entfällt die Notwendigkeit einer Winkeltransformation im Regelkreis, so dass der Entwurf der Regelung in einem beliebigen Koordinatensystem erfolgen kann.
Die Differentialgleichungen (22) und (23) sind auf Grund der starken Nichtlinearität für den Reglerentwurf jedoch nicht geeignet. Daher sieht die vorliegende Erfindung vor, das System der Zustandsgleichungen so umzuformen, dass die Wirk- und Blindleistung ein lineares Glied in der Systemmatrix bilden. Durch die Transformation des Systemzustandsdarstellung kann das System jedoch einen stark nichtlinearen Charakter erhalten. Dieses nichtlineare Verhalten wird wiederum durch nichtlineare Rückkopplungsglieder kompensiert. Im optimalen Fall soll das neu definierte System für jeweils die Wirkleistung und die Blindleistung ein Tiefpassverhalten erster Ordnung bekommen. Die Zeitkonstanten dieser Tiefpässe sind von der Zustandsmatrix des neu definierten Systems abhängig. Für das neu definierte System können dann zwei lineare Regler, z.B. zwei PI-Regler, eingesetzt werden.
Die angestrebte Linearisierung der Zustandsgleichungen wird erreicht durch die Definition der Variablen:

$$v_1 = u_{r\beta S}\psi_{s\alpha S} - u_{r\alpha S}\psi_{s\beta S}$$

$$= -\frac{\psi_{sS}^2}{\left(u_{s\beta S}\psi_{s\alpha S} - u_{s\alpha S}\psi_{s\beta S}\right)}\frac{w_\sigma}{L_s}\left(-\frac{1}{T_v}\frac{u_{s\alpha S}\psi_{s\alpha S} + u_{s\beta S}\psi_{s\beta S}}{L_m\left(u_{s\beta S}\psi_{s\alpha S} - u_{s\alpha S}\psi_{s\beta S}\right)}\psi_{sS}^2 + \right.$$

$$+\frac{1}{T_v}\frac{u_{s\alpha S}\psi_{s\alpha S} + u_{s\beta S}\psi_{s\beta S}}{\left(u_{s\beta S}\psi_{s\alpha S} - u_{s\alpha S}\psi_{s\beta S}\right)}\left(\psi_{s\alpha S}i_{r\alpha S} + \psi_{s\beta S}i_{r\beta S}\right) + \quad\quad (25)$$

$$+\omega_r\left(\left(\psi_{s\alpha S}i_{r\alpha S} + \psi_{s\beta S}i_{r\beta S}\right) + \frac{L_m}{w_\sigma}\psi_{sS}^2\right) - $$

$$\left. -\frac{L_m}{w_\sigma}\left(u_{s\beta S}\psi_{s\alpha S} - u_{s\alpha S}\psi_{s\beta S}\right) + u_{s\alpha S}i_{r\beta S} - u_{s\beta S}i_{r\alpha S} + s_1\right)$$

und

$$v_2 = u_{r\alpha S}\psi_{s\alpha S} + u_{r\beta S}\psi_{s\beta S}$$

$$= -\frac{w_\sigma}{L_m}\frac{\psi_{sS}^2}{\left(u_{s\beta S}\psi_{s\alpha S} - u_{s\alpha S}\psi_{s\beta S}\right)}\left(-\frac{1}{T_v}\frac{\psi_{sS}^2}{L_m} + \right.$$

$$+\frac{1}{T_v}\frac{u_{s\alpha S}\psi_{s\alpha S} + u_{s\beta S}\psi_{s\beta S}}{\left(u_{s\beta S}\psi_{s\alpha S} - u_{s\alpha S}\psi_{s\beta S}\right)}\left(\psi_{s\alpha S}i_{r\beta S} - \psi_{s\beta S}i_{r\alpha S}\right) + \quad\quad (26)$$

$$+\frac{R_s L_m}{L_s w_\sigma}\psi_{sS}^2 + \frac{R_s L_m}{L_s}i_{rS}^2 - \omega_r\left(\psi_{s\alpha S}i_{r\beta S} - \psi_{s\beta S}i_{r\alpha S}\right) - $$

$$\left. -\frac{L_m}{w_\sigma}\left(u_{s\alpha S}\psi_{s\alpha S} + u_{s\beta S}\psi_{s\beta S}\right) + u_{s\alpha S}i_{r\alpha S} + u_{s\beta S}i_{r\beta S} + s_2\right)$$

wobei die Größen $s_1$ und $s_2$ neu eingeführt werden, um eine Regelung des Systems zu ermöglichen.

Offensichtlich entspricht dabei $v_1$ aus Gleichung (25) dem Kreuzprodukt aus Rotorspannung und Statorfluss und $v_2$ aus Gleichung (26) dem Skalarprodukt von Rotorspannung und Statorfluss. Die Wahl der Zustandsvariablen und dieser Variablen $v_1$ und $v_2$ erlaubt es, in der erfindungsgemäßen Regelung auf die Information über die Raumzeigerlage zu verzichten, wodurch eine Regelung in einem wicklungsfesten Koordinatensystem ermöglicht wird, und trotz Nichtlinearität eine einfache Reglersynthese zu ermöglichen. Physikalisch hängt der Zustand der Asynchronmaschine 1 von der gegenseitigen Lage der Raumzeiger ab, die zur Beschreibung der Dynamik gewählt worden sind. Die Zusammenhänge zwischen Raumzeigern lassen sich jedoch auch ohne getrennte Winkelinformation durch Kreuz- und Skalarprodukte beschreiben. Die Zustandsvektoren gemäß der vorliegenden Erfindung wurden daher so gewählt, dass eine Beschreibung durch Kreuz- und Skalarprodukte möglich ist.

Da es sich bei der Rotorspannung $\mathbf{u}_{rS}$ (beschrieben durch die Komponenten $u_{r\alpha S}$ und $u_{r\beta S}$) in den Gleichungen (25) und (26) um die Stellgröße der Regelung handelt, kann eine Berechnung der Variablen $v_1$ und $v_2$ nicht direkt über die Definition des Kreuz- und Skalarproduktes aus Rotorspannung und Statorfluss (vgl. jeweils die erste Zeile der Gleichungen (25) und (26)) erfolgen. Die Kreuz- und Skalarprodukte können jedoch gemäß den jeweils zweiten Zeilen der Gleichungen (25) und (26) durch Systemgrößen ausgedrückt und dadurch indirekt berechnet werden.

Durch Einsetzen der Variablen $v_1$ und $v_2$ nach den Gleichungen (25) und (26) in die Gleichungen (22) und (23) erhält man die angestrebte Linearisierung der Zustandsgleichungen, die sich wie folgt zusammenfassen lassen:

$$\frac{d\omega_r}{d\tau} = \frac{L_m}{JL_s}\left(\psi_{s\alpha S}i_{r\beta S} - \psi_{s\beta S}i_{r\alpha S}\right) - \frac{1}{J}m_0 \ , \tag{27}$$

$$\frac{dp_s}{d\tau} = -\frac{1}{T_v}p_s + s_1 \ , \tag{28}$$

$$\frac{dq_s}{d\tau} = -\frac{1}{T_v}q_s + s_2 \ , \tag{29}$$

$$\frac{d\left(\psi_{sS}^2\right)}{d\tau} = -2\frac{R_s}{L_s}\psi_{sS}^2 + 2\frac{R_sL_m}{L_s}\left(\psi_{s\alpha S}i_{r\alpha S} + \psi_{s\beta S}i_{r\beta S}\right) + 2\left(u_{s\alpha S}\psi_{s\alpha S} + u_{s\beta S}\psi_{s\beta S}\right) \ . \tag{30}$$

Die Gleichungen (27) bis (30) werden gemäß der vorliegenden Erfindung direkt zur Synthese der Regelung verwendet.

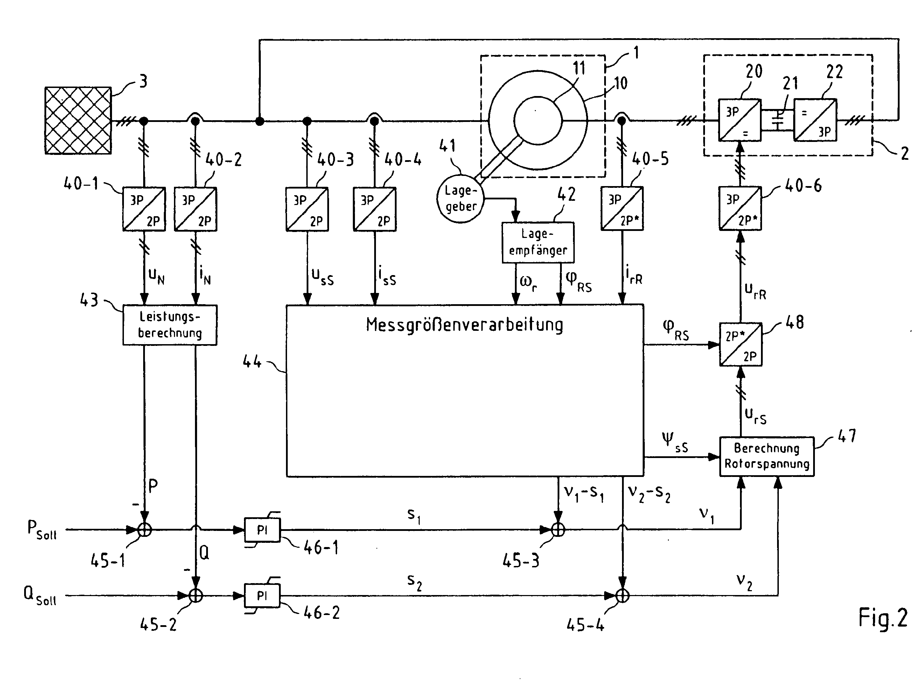

Fig. 2 zeigt eine schematische Darstellung dieser Regelung. Dargestellt sind wiederum die doppeltgespeiste Asynchronmaschine 1 mit Stator 10 und Rotor 11, das speisende Netz 3 und der Umrichter 2.

In diesem System werden nun zur Vornahme der erfindungsgemäßen Regelung der Wirk- und Blindleistung unterschiedliche Spannungen und Ströme gemessen und zur Regelung verwendet. Es sind dies im einzelnen die Netzspannung $\mathbf{u}_N$ , der Netzstrom $\mathbf{i}_N$, die Statorspannung $\mathbf{u}_{sS}$ und der Rotorstrom $\mathbf{i}_{rR}$ . Diese Spannungen und Ströme werden in natürlichen dreiphasigen Koordinaten gemessen und anschließend mittels Transformationseinheiten 40-1, 40-2, 40-3 und 40-5 in ein zweiphasiges, statorfestes oder rotorfestes Koordinatensystem überführt. Beispielsweise liegt dann also die statorfeste Statorspannung $\mathbf{u}_{sS}$ in zwei Komponenten $u_{s\alpha S}$ und $u_{s\beta S}$ vor (entsprechend für die übrigen Spannungen und Ströme).

Optional kann ferner der Statorstrom $\mathbf{i}_{sS}$ gemessen und mittels einer Transformationseinheit 40-4 in ein zweiphasiges, statorfestes Koordinatensystem überführt werden, um eine Berechnung der Rotordrehzahl $\omega_r$ und des Rotorlagewinkels $\varphi_{RS}$ zwischen Rotor und Stator zu ermöglichen.

Alternativ zu dieser Vorgehensweise kann auch anhand eines optionalen Lagegebers 41 und eines optionalen Lageempfängers 42 die Rotordrehzahl $\omega_r$ und der Rotorlagewinkel $\varphi_{RS}$ zwischen Rotor und Stator gemessen werden, eine Messung des Statorstroms ist dann nicht erforderlich.

Aus der Netzspannung $\mathbf{u}_N$ und dem Netzstrom $\mathbf{i}_N$ wird in einer Leistungsberechnungseinheit 43 die Ist-Wirkleistung $P$ und die Ist-Blindleistung $Q$ berechnet und mit negativem Vorzeichen den Addierern 45-1 und 45-2 zugeführt, um durch Subtraktion von den extern vorgegebenen Soll-Wirkleistungen $P_{Soll}$ und Soll-Blindleistungen $Q_{Soll}$ jeweils eine Sollgrößenabweichung der Wirkleistung und eine Sollgrößenabweichung der Blindleistung an den Ausgängen der Addierer 45-1 und 45-2 zu erzeugen. In Fig. 2 ist die Regelung ausgehend von den Netzleistungen als Ist-Größen dargestellt. Es ist jedoch ohne weiteres möglich, anstelle der Netzleistungen zu Statorleistungen als Ist-Größen überzugehen.

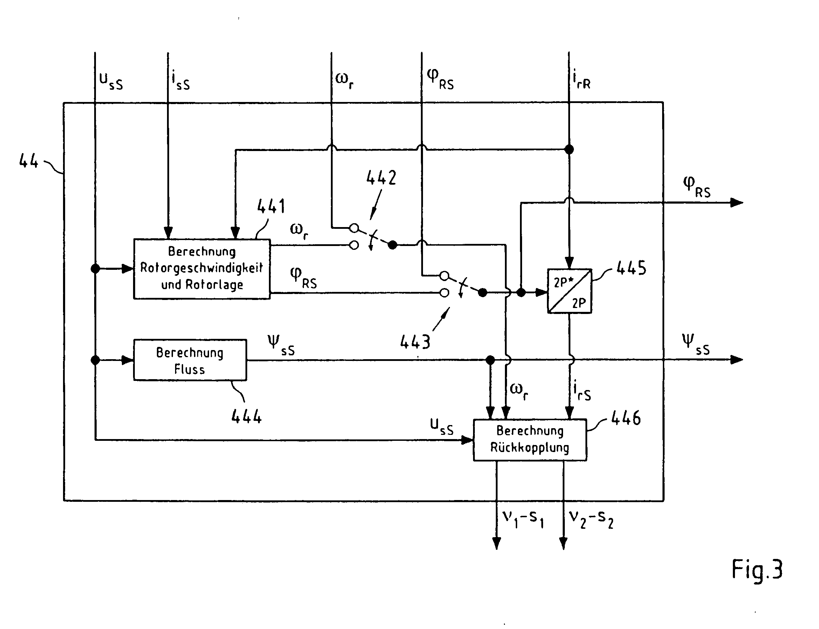

Die gemessenen und anschließend in ein zweiphasiges Koordinatensystem transformierten Größen $\mathbf{u}_{sS}$ und $\mathbf{i}_{rR}$, und wahlweise die Messgrößen $\omega_r$ und $\varphi_{RS}$ oder die gemessene und anschließend in ein zweiphasiges Koordinatensystem transformierte Größe $\mathbf{i}_{sS}$ , die zur Berechnung von $\omega_r$ und $\varphi_{RS}$ erforderlich ist, werden der Messgrößenverarbeitungseinheit 44 zugeführt, die in zumindest teilweiser Abhängigkeit von dieser Größen die Ausgangsgrößen Rotorlagewinkel $\varphi_{RS}$, statorfester Statorfluss $\psi_{sS}$ und die Rückkopplungsgrößen $v_1$-$s_1$ und $v_2$-$s_2$ gemäß den Gleichungen (25) und (26) ausgibt. Auf die Berechnung dieser Ausgabegrößen wird im Zusammenhang mit der Beschreibung der Fig. 3 noch genauer eingegangen.

Die in Fig. 2 dargestellte erfindungsgemäße Regelung verwendet die beiden PI-Regler 46-1 und 46-2, um in Abhängigkeit von Sollgrößenabweichungen der Wirkleistung und der Blindleistung Reglerausgangsgrößen $s_1$ und $s_2$ zu erzeugen. Die Reglerausgangsgrößen $s_1$ und $s_2$ werden getrennt den Addierern 45-3 und 45-4 zugeführt, wo sie durch Addition mit den Rückkopplungsgrößen $v_1$-$s_1$ und $v_2$-$s_2$ beaufschlagt werden, die von der Messgrößenverarbeitungseinheit 44 aus dem momentanen Systemzustand der Asynchronmaschine 1 bestimmt werden. Am Ausgang der Addierer 45-3 und 45-4 liegen dann die Größen $v_1$ und $v_2$ an, die der Einheit 47 zur Berechnung der Rotorspannung zugeführt werden.

Die Einheit 47 erhält als zusätzliche Eingangsgröße den statorfesten Statorfluss $\psi_{sS}$ und bestimmt die zur Erzielung der vorgegebenen Wirkleistung $P_{Soll}$ und der vorgegebenen Blindleistung $Q_{Soll}$ erforderliche statorfeste Rotorspannung $\mathbf{u}_{rS}$ (in einem zweiphasigem Koordinatensystem) gemäß den folgenden Gleichungen:

$$u_{raS} = \frac{-v_1 \psi_{s\beta S} + v_2 \psi_{s\alpha S}}{\psi_{sS}^2} \; , \qquad\qquad (31)$$

$$u_{r\beta S} = \frac{v_2 \psi_{s\beta S} + v_1 \psi_{s\alpha S}}{\psi_{sS}^2} \; . \qquad\qquad (32)$$

Die Transformation der Rotorspannung aus dem statorfesten Koordinatensystem in das rotorfeste Koordinatensystem wird in der Transformationseinheit 48, die als zusätzliche Eingangsgröße von der Messgrößenverarbeitungseinheit 44 den Rotorlagewinkel $\varphi_{RS}$ erhält, nach folgender Vorschrift vorgenommen:

$$u_{raR} = u_{raS} \cos\varphi_{RS} - u_{r\beta S} \sin\varphi_{RS} \; , \qquad\qquad (33)$$

$$u_{r\beta R} = u_{raS} \sin\varphi_{RS} + u_{r\beta S} \cos\varphi_{RS} \; . \qquad\qquad (34)$$

Schließlich wird die rotorfeste Rotorspannung aus dem zweiphasigen Koordinatensystem durch die Transformationseinheit 40-6 in das dreiphasige Koordinatensystem transformiert und über den maschinenseitigen Pulswechselrichter 20 des Umrichters 2 dem Rotor 11 der Asynchronmaschine 1 eingeprägt.

Die erfindungsgemäße Regelung benötigt lediglich die zwei PI-Regler 46-1 und 46-2, um die stationäre Sollwertabweichung der Wirkleistung und der Blindleistung mit ausreichender Geschwindigkeit auszuregeln. Hierzu sind die Parameter der PI-Regler, insbesondere die Zeitkonstanten der PI-Regler, an die Kenngrößen der Asynchronmaschine 1, wie sie in den Zustandsgleichungen ihren Niederschlag finden, angepasst.

In Fig. 3 ist der schematische Aufbau der Messgrößenverarbeitungseinheit 44 aus Fig. 2 dargestellt. Die Messgrößenverarbeitungseinheit 44 erhält als Eingangsgrößen die gemessenen und anschließend in entsprechende zweiphasige Koordinatensystem transformierten Größen statorfeste Statorspannung $\mathbf{u}_{sS}$, rotorfester Rotorstrom $\mathbf{i}_{rR}$ und wahlweise den statorfesten Statorstrom $\mathbf{i}_{sS}$ oder die Rotordrehzahl $\omega_r$ und den Rotorlagewinkel $\varphi_{RS}$, und gibt in Abhängigkeit dieser Eingabegrößen den Rotorlagewinkel $\varphi_{RS}$, den statorfesten Statorfluss $\psi_{sS}$ und die Rückkopplungsgrößen $v_1 - s_1$ und $v_2 - s_2$ aus.

Wie bereits angedeutet, können die Rotordrehzahl $\omega_r$ und der Rotorlagewinkel $\varphi_{RS}$ optional mittels des Lagegebers 41 und des Lageempfängers 42 aus Fig. 2 gemessen werden. Alternativ kann in der Messgrößenverarbeitungseinheit 44 auch eine Schätzung von Rotordrehzahl und Rotorlagewinkel aus der statorfesten Statorspannung $\mathbf{u}_{sS}$, dem statorfesten Statorstrom $\mathbf{i}_{sS}$ und dem rotorfesten Rotorstrom $\mathbf{i}_{rR}$ erfolgen, die dann in der Einheit 441 implementiert ist. Mittels der Schalter 442 und 443 kann dann jeweils zwischen gemessener/geschätzter Rotordrehzahl $\omega_r$ und gemessenem/geschätztem Rotorlagewinkel $\varphi_{RS}$ gewählt werden. Natürlich kann aus Kostengründen auch eine der beiden Optionen Messung/Schätzung komplett entfallen.

Der Rotorlagewinkel $\varphi_{RS}$ wird dann einerseits zur Transformation des rotorfesten Rotorstroms $\mathbf{i}_{rR}$ auf den statorfesten Rotorstrom $\mathbf{i}_{rS}$ in der Transformationseinheit 445 verwendet und andererseits von der Messgrößenverarbeitungseinheit 44 an die Transformationseinheit 48 aus Fig. 2 ausgegeben.

Die Messgrößenverarbeitungseinheit 44 umfasst ferner eine Einheit 444 zur Berechnung des statorfesten Statorflusses $\psi_{sS}$. Die Berechnung kann dabei nach einer beliebigen Methode erfolgen. Beispielsweise kann der Statorfluss nach Umwandlung der Gleichung (4) in folgender Form dargestellt werden:

$$\psi_{saS} = i_{saS} L_s + i_{raS} L_m \; , \qquad\qquad (35)$$

$$\psi_{s\beta S} = i_{s\beta S} L_s + i_{r\beta S} L_m .$$
(36)

Bedingt durch Sättigungseffekte der Maschine oder durch die Art der Messwandler kann die oben dargestellte Methode zur Berechnung des Statorflusses zu Problemen führen. Es ist deshalb vorteilhaft, eine andere Methode zu verwenden. Bei Drehfeldmaschinen mit großer Leistung kann der Statorwiderstand $R_s$ vernachlässigt werden. Die Gleichung (1) nimmt damit folgende Form an:

$$\frac{d\psi_s}{d\tau} = \mathbf{u}_s .$$
(37)

Aus Gleichung (37) ergibt sich im stationären Fall für die Komponenten des Statorflusses der folgende Zusammenhang:

$$\psi_{s\alpha S} = -\frac{u_{s\beta S}}{\omega_-} ,$$
(38)

$$\psi_{s\beta S} = \frac{u_{s\alpha S}}{\omega_s} .$$
(39)

Dabei ist $\omega_s$ die Kreisfrequenz der Statorspannung.
Die Berechnung der Rückkopplungsgrößen $v_1$-$s_1$ und $v_2$-$s_2$ wird schließlich in der Einheit 446 in Abhängigkeit von $\mathbf{u}_{sS}$, $\psi_{sS}$, $\mathbf{i}_{rS}$ und $\omega_r$ durchgeführt.
In einer ersten bevorzugten Ausführungsform der vorliegenden Erfindung erfolgt die Berechnung der Rückkopplungsgrößen nach den Gleichungen (25) und (26).
In einer zweiten bevorzugten Ausführungsform wird zur Herleitung der Gleichungen für die Rückkopplungsgrößen der Statorwiderstand $R_s$ vernachlässigt. Diese Annahme ist beispielsweise in großen Maschinen gerechtfertigt. In diesem Fall kann davon ausgegangen werden, dass die Statorspannung und der Statorfluss senkrecht aufeinander stehen. Wenn man weiterhin von einem stationären Zustand ausgeht und berücksichtigt, dass mit bezogenen Größen gerechnet wird, ergeben sich die folgenden Zusammenhänge:

$$\psi_{sS}^2 \cong 1 ,$$
(40)

$$u_{s\alpha S}\psi_{s\alpha S} + u_{s\beta S}\psi_{s\beta S} \cong 0 ,$$
(41)

$$u_{s\beta S}\psi_{s\alpha S} - u_{s\alpha S}\psi_{s\beta S} \cong 1 .$$
(42)

Die Berücksichtigung der Gleichungen (40), (41) und (42) führt zur Vereinfachung der Gleichungen (22) und (23). Diese lassen sich dann in der folgenden Form darstellen:

$$\frac{dp_s}{d\tau} = -\frac{1}{T_v} p_s - \frac{L_s}{L_m} \Big[ \omega_r \Big( \big( \psi_{s\alpha S} i_{r\alpha S} + \psi_{s\beta S} i_{r\beta S} \big) + \frac{L_m}{w_\sigma} \psi_{sS}^2 \Big) +$$

$$+ \frac{L_s}{w_\sigma} \big( u_{r\beta S} \psi_{s\alpha S} - u_{r\alpha S} \psi_{s\beta S} \big) - \frac{L_m}{w_\sigma} \big( u_{s\beta S} \psi_{s\alpha S} - u_{s\alpha S} \psi_{s\beta S} \big) + \qquad \cdot \qquad (43)$$

$$+ u_{s\alpha S} i_{r\beta S} - u_{s\beta S} i_{r\alpha S} \Big]$$

$$\frac{dq_s}{d\tau} = -\frac{1}{T_v} q_s - \frac{L_s}{L_m} \Big[ -\frac{1}{T_v L_m} + \frac{R_s L_m}{L_s w_\sigma} \psi_{sS}^2 + \frac{R_s L_m}{L_s} i_{sS}^2 -$$

$$- \omega_r \big( \psi_{s\alpha S} i_{r\beta S} - \psi_{s\beta S} i_{r\alpha S} \big) + \frac{L_s}{w_\sigma} \big( u_{r\alpha S} \psi_{s\alpha S} + u_{r\beta S} \psi_{s\beta S} \big) \qquad \cdot \qquad (44)$$

$$+ u_{s\alpha S} i_{r\alpha S} + u_{s\beta S} i_{r\beta S} \Big]$$

Führt man wie bei der ersten bevorzugten Ausführungsform auch hier zur Linearisierung der Differentialgleichungen (43) und (44) Rückkopplungen ein, erhält man wiederum die Zustandsgleichungen nach den Gleichungen (27) bis (30), jedoch mit den veränderten Variablen

$$\overset{\bullet}{\upsilon}_1 = u_{r\beta S} \psi_{s\alpha S} - u_{r\alpha S} \psi_{s\beta S}$$

$$= -\frac{w_\sigma}{L_s} \Big( \omega_r \Big( \big( \psi_{s\alpha S} i_{r\alpha S} + \psi_{s\beta S} i_{r\beta S} \big) + \frac{L_m}{w_\sigma} \psi_{sS}^2 \Big) - \qquad (45)$$

$$- \frac{L_m}{w_\sigma} \big( u_{s\beta S} \psi_{s\alpha S} - u_{s\alpha S} \psi_{s\beta S} \big) + u_{s\alpha S} i_{r\beta S} - u_{s\beta S} i_{r\alpha S} + s_1 \Big)$$

und

$$\overset{\bullet}{\upsilon}_2 = u_{r\alpha S} \psi_{s\alpha S} + u_{r\beta S} \psi_{s\beta S}$$

$$= -\frac{w_\sigma}{L_m} \Big( -\frac{1}{T_v L_m} - \omega_r \big( \psi_{s\alpha S} i_{r\beta S} - \psi_{s\beta S} i_{r\alpha S} \big) + u_{s\alpha S} i_{r\alpha S} + u_{s\beta S} i_{r\beta S} + s_2 \Big) \qquad (46)$$

Der einzige Unterschied zur ersten bevorzugten Ausführungsform besteht also in einer unterschiedlichen Berechnung der Rückkopplungen in der Einheit 446 der Messgrößenverarbeitungseinheit 44. Die sonstige Struktur der erfindungsgemäßen Regelung nach Fig. 2 und 3 bleibt erhalten.

Durch die Vereinfachung der Rückkopplungsgrößen aus den Gleichungen (45) und (46) gemäß der zweiten bevorzugten Ausführungsform der vorliegenden Erfindung kann im Vergleich zur ersten bevorzugten Ausführungsform die Rückkopplung aufwandsgünstig berechnet und die Regelung damit weniger komplex und schneller durchgeführt werden. Modellabweichungen durch die Annahme eines vernachlässigbaren Statorwiderstandes werden dabei, wie alle anderen Störgrößen des Systems, durch die Regelung ausgeglichen, so dass sich bei der zweiten bevorzugten Ausführungsform kein Verlust in der Qualität oder Stabilität der Regelung ergibt.

In einer dritten bevorzugten Ausführungsform wird schließlich bei der Herleitung der Rückkopplungen von einem stationären Zustand ausgegangen. Die Gleichungen (6) und (7) lassen sich dann wie folgt vereinfachen:

$$0 = -\frac{R_s}{L_s}\psi_{s\alpha S} + R_s\frac{L_m}{L_s}i_{r\alpha S} + u_{s\alpha S} \text{ ,} \tag{47}$$

$$0 = -\frac{R_s}{L_s}\psi_{s\beta S} + R_s\frac{L_m}{L_s}i_{r\beta S} + u_{s\beta S} \text{ .} \tag{48}$$

Zuerst werden die Gleichungen (47) und (48) mit $\psi_{s\alpha S}$ und $\psi_{s\beta S}$ multipliziert. Die dadurch entstehenden Gleichungen werden einmal subtrahiert und einmal addiert. So erhält man die Gleichungen:

$$u_{s\beta S}\psi_{s\alpha S} - u_{s\alpha S}\psi_{s\beta S} = \psi_{sS}^2 + \frac{R_s L_m}{L_s}\left(\psi_{s\alpha S}i_{r\beta S} + \psi_{s\beta S}i_{r\alpha S}\right) \text{ ,} \tag{49}$$

$$u_{s\alpha S}\psi_{s\alpha S} + u_{s\beta S}\psi_{s\beta S} = \frac{R_s}{L_s}\psi_{sS}^2 - \frac{R_s L_m}{L_s}\left(\psi_{s\alpha S}i_{r\alpha S} + \psi_{s\beta S}i_{r\beta S}\right) \text{ .} \tag{50}$$

Durch das Einsetzen der Gleichungen (49) und (50) in die Gleichungen (15) und (16) ergeben sich folgende Leistungsgleichungen der Drehfeldmaschine:

$$P_s = \frac{U_s^2}{R_s} - \frac{\psi_s^2}{R_s} - \frac{L_m}{L_s}\left(\psi_{s\alpha S}i_{r\beta S} + \psi_{s\beta S}i_{r\alpha S}\right) \text{ ,} \tag{51}$$

$$Q_s = \frac{\psi_s^2}{L_s} - \frac{L_m}{L_s}\left(\psi_{s\alpha S}i_{r\alpha S} + \psi_{s\beta S}i_{r\beta S}\right) \text{ .} \tag{52}$$

Durch Differenzieren der Gleichungen (51) und (52) und durch Einsetzen der Gleichungen (6) bis (9) erhält man nach Vereinfachung folgende Differentialgleichungen:

$$\frac{dp_s}{d\tau} = -\frac{1}{T_v}p_s - \frac{L_m}{L_s}\left[\omega_r\left(\left(\psi_{s\alpha S}i_{r\alpha S} + \psi_{s\beta S}i_{r\beta S}\right) + \frac{L_m}{w_\sigma}\psi_{sS}^2\right) + \right.$$
$$+\frac{L_s}{w_\sigma}\left(u_{r\beta S}\psi_{s\alpha S} - u_{r\alpha S}\psi_{s\beta S}\right) - \frac{L_m}{w_\sigma}\left(u_{s\beta S}\psi_{s\alpha S} - u_{s\alpha S}\psi_{s\beta S}\right) + \tag{53}$$
$$\left.+ u_{s\alpha S}i_{r\beta S} - u_{s\beta S}i_{r\alpha S}\right]$$

$$\frac{dq_s}{d\tau} = -\frac{1}{T_v} q_s - \frac{L_s}{L_m}\left[ \frac{R_s L_m}{L_s w_\sigma}\psi_{sS}^2 + \frac{R_s L_m}{L_s} i_{rS}^2 - \right.$$

$$- \omega_r\left(\psi_{s\alpha S} i_{r\beta S} + \psi_{s\beta S} i_{r\alpha S}\right) + \frac{L_s}{w_\sigma}\left(u_{r\alpha S}\psi_{s\alpha S} - u_{r\beta S}\psi_{s\beta S}\right) - \qquad (54)$$

$$\left. - \frac{L_m}{w_\sigma}\left(u_{s\alpha S}\psi_{s\alpha S} + u_{s\beta S}\psi_{s\beta S}\right) + u_{s\alpha S} i_{r\alpha S} + u_{s\beta S} i_{r\beta S}\right]$$

Führt man wie bei der ersten und zweiten bevorzugten Ausführungsform auch hier zur Linearisierung der Differentialgleichungen (53) und (54) Rückkopplungen ein, erhält man wiederum die Zustandsgleichungen nach den Gleichungen (27) bis (30), jedoch mit den veränderten Variablen

$$v_1^{\bullet\bullet} = u_{r\beta S}\psi_{s\alpha S} - u_{r\alpha S}\psi_{s\beta S}$$

$$= -\frac{w_\sigma}{L_m}\left(\omega_r\left[\left(\psi_{s\alpha S} i_{r\alpha S} + \psi_{s\beta S} i_{r\beta S}\right) + \frac{L_m}{w_\sigma}\psi_{sS}^2\right] - \qquad (55)$$

$$-\frac{L_m}{w_\sigma}\left(u_{s\beta S}\psi_{s\alpha S} - u_{s\alpha S}\psi_{s\beta S}\right) + u_{s\alpha S} i_{r\beta S} - u_{s\beta S} i_{r\alpha S} + s_1\right)$$

und

$$v_2^{\bullet\bullet} = u_{r\alpha S}\psi_{s\alpha S} + u_{r\beta S}\psi_{s\beta S}$$

$$= -\frac{w_\sigma}{L_m}\left(\frac{R_s L_m}{L_s w_\sigma}\psi_{sS}^2 + \frac{R_s L_m}{L_s} i_{rS}^2 - \omega_r\left(\psi_{s\alpha S} i_{r\beta S} + \psi_{s\beta S} i_{r\alpha S}\right) - \qquad (56)$$

$$-\frac{L_m}{w_\sigma}\left(u_{s\alpha S}\psi_{s\alpha S} + u_{s\beta S}\psi_{s\beta S}\right) + u_{s\alpha S} i_{r\alpha S} + u_{s\beta S} i_{r\beta S} + s_2\right)$$

Der einzige Unterschied zur ersten und zweiten bevorzugten Ausführungsform besteht wiederum in einer unterschiedlichen Berechnung der Rückkopplungen in der Einheit 446 der Messgrößenverarbeitungseinheit 44. Die sonstige Struktur der erfindungsgemäßen Regelung nach Fig. 2 und 3 bleibt erhalten.

Durch die Vereinfachung der Rückkopplungsgrößen aus den Gleichungen (55) und (56) gemäß der dritten bevorzugten Ausführungsform der vorliegenden Erfindung kann im Vergleich zur ersten bevorzugten Ausführungsform die Rückkopplung aufwandsgünstiger berechnet und die Regelung damit weniger komplex und schneller durchgeführt werden. Modellabweichungen durch die Annahme eines stationären Systemzustands werden dabei, wie alle anderen Störgrößen des Systems, durch die Regelung ausgeglichen, so dass sich auch bei der dritten bevorzugten Ausführungsform kein Verlust in der Qualität oder Stabilität der Regelung ergibt.

Die vorliegende Erfindung wurde anhand von bevorzugten Ausführungsformen beschrieben. Durch Verwendung von unterschiedlichen Vereinfachungen bei der Herleitung der Zustandsgleichungen ergeben sich mehrere Varianten der erfindungsgemäßen Regelung. Eine derartige Regelung zeichnet sich durch große Genauigkeit und Dynamik aus. Für die Steuerung des Umrichters ist keine Transformation der Messgrößen auf ein bestimmtes Bezugssystem notwendig. Das Koordinatensystem kann also frei gewählt werden. Der Einfachheit halber kann beispielsweise ein statorfestes Koordinatensystem gewählt werden.

**Patentansprüche**

1. Ein Verfahren zur Regelung der von einer Drehfeldmaschine (1) abgegebenen oder aufgenommenen Wirk- und Blindleistung in einem wicklungsfesten Koordinatensystem, wobei in Abhängigkeit einer Sollgrößenabweichung der Wirkleistung mit einem ersten Regler (46-1) eine erste Reglerausgangsgröße erzeugt wird und in Abhängigkeit einer Sollgrößenabweichung der Blindleistung mit einem zweiten Regler (46-2) eine zweite Reglerausgangsgröße erzeugt wird, und wobei die erste und zweite Reglerausgangsgröße mit jeweiligen Rückkopplungsgrößen beaufschlagt werden, die Funktionen aus mindestens einer zeitveränderlichen Systemgröße der Drehfeldmaschine sind, **dadurch gekennzeichnet, dass** als Zustandsvariablen, die der Regelung zugrunde liegen, direkt die Wirk- und Blindleistung gewählt werden, wobei zumindest aus den mit den Rückkopplungsgrößen beaufschlagten ersten und zweiten Reglerausgangsgrößen ohne zusätzliche unterlagerte Regelkreise eine Spannung oder ein Strom der Drehfeldmaschine als Stellgröße bestimmt wird, die Rückkopplungsgrößen so gewählt werden, dass die Blind- und Wirkleistung zumindest teilweise entkoppelt sind.

2. Das Verfahren nach Anspruch 1, **dadurch gekennzeichnet, dass** die Regler (46-1, 46-2) lineare Regler sind.

3. Das Verfahren nach einem der Ansprüche 1-2, **dadurch gekennzeichnet, dass** die Regler (46-1, 46-2) PI-Regler sind.

4. Das Verfahren nach einem der Ansprüche 1-3, **dadurch gekennzeichnet, dass** als Stellgröße eine Rotorspannung der Drehfeldmaschine (1) bestimmt wird.

5. Das Verfahren nach einem der Ansprüche 1-3, **dadurch gekennzeichnet, dass** als Stellgröße eine Statorspannung der Drehfeldmaschine (1) bestimmt wird.

6. Das Verfahren nach einem der Ansprüche 1-3, **dadurch gekennzeichnet, dass** als Stellgröße ein Erregerstrom der Drehfeldmaschine (1) bestimmt wird.

7. Das Verfahren nach einem der Ansprüche 1-6, **dadurch gekennzeichnet, dass** bei der Berechnung der Rückkopplungsgrößen der Ohmsche Widerstand des Stators der Drehfeldmaschine (1) vernachlässigt wird.

8. Das Verfahren nach einem der Ansprüche 1-6, **dadurch gekennzeichnet, dass** bei der Berechnung der Rückkopplungsgrößen von einem stationären Zustand ausgegangen wird.

9. Das Verfahren nach einem der Ansprüche 1-8, **dadurch gekennzeichnet, dass** die Wirk- und Blindleistung des Stators (10) der Drehfeldmaschine (1) geregelt werden.

10. Das Verfahren nach einem der Ansprüche 1-8, **dadurch gekennzeichnet, dass** die Wirk- und Blindleistung des Netzes (3), an das die Drehfeldmaschine (1) angeschlossen ist, geregelt werden.

11. Das Verfahren nach einem der Ansprüche 1-10, **dadurch gekennzeichnet, dass** die erste Reglerausgangsgröße mit einer Rückkopplungsgröße beaufschlagt wird, die dem Kreuzprodukt von Rotorspannung und Statorfluss der Drehfeldmaschine entspricht, und dass die zweite Reglerausgangsgröße mit einer Rückkopplungsgröße beaufschlagt wird, die dem Skalarprodukt von Rotorspannung und Statorfluss entspricht.

12. Das Verfahren nach einem der Ansprüche 1-11, **dadurch gekennzeichnet, dass** die Rückkopplungsgrößen Funktionen zumindest der Statorspannung, des Statorflusses, des Rotorstroms und der Rotordrehzahl sind.

13. Das Verfahren nach einem der Ansprüche 1-12, **dadurch gekennzeichnet, dass** die Rotorspannung der Drehfeldmaschine als Stellgröße ohne weitere Regelung aus den mit den Rückkopplungsgrößen beaufschlagten ersten und zweiten Reglerausgangsgrößen und dem Statorfluss bestimmt wird.

14. Das Verfahren nach einem der Ansprüche 1-13, **dadurch gekennzeichnet, dass** zumindest die Statorspannung und der Rotorstrom der Drehfeldmaschine (1) gemessen werden.

15. Das Verfahren nach einem der Ansprüche 1-14, **dadurch gekennzeichnet, dass** der Statorstrom der Drehfeldmaschine (1) gemessen wird.

**16.** Das Verfahren nach einem der Ansprüche 1-15, **dadurch gekennzeichnet, dass** die Rotordrehzahl der Drehfeldmaschine (1) gemessen oder aus der Statorspannung, dem Statorstrom und dem Rotorstrom der Drehfeldmaschine bestimmt wird.

**17.** Das Verfahren nach einem der Ansprüche 1-16, **dadurch gekennzeichnet, dass** der Rotorlagewinkel der Drehfeldmaschine (1) gemessen oder aus der Statorspannung, dem Statorstrom und dem Rotorstrom der Drehfeldmaschine bestimmt wird.

**18.** Das Verfahren nach einem der Ansprüche 1-17, **dadurch gekennzeichnet, dass** der Statorfluss der Drehfeldmaschine (1) aus der Statorspannung und der Kreisfrequenz der Statorspannung der Drehfeldmaschine berechnet wird.

**19.** Das Verfahren nach einem der Ansprüche 14-18, **dadurch gekennzeichnet, dass** Spannungen und Ströme der Drehfeldmaschine (1) jeweils gemessen und dann in ein zweiphasiges Koordinatensystem transformiert werden, und dass die Stellgröße in einem zweiphasigen Koordinatensystem bestimmt und dann in ein dreiphasiges Koordinatensystem transformiert wird.

**20.** Das Verfahren nach einem der Ansprüche 1-19, **dadurch gekennzeichnet, dass** die Drehfeldmaschine (1) eine doppeltgespeiste Asynchronmaschine ist, deren Stator (10) direkt mit einem Netz (3) verbunden ist, und deren Rotor (11) mit einem Umrichter (2)verbunden ist.

**21.** Ein Computerprogramm mit Befehlen, deren Ausführung einen Prozessor veranlasst, das Verfahren gemäß einem der Ansprüche 1-20 durchzuführen.

**22.** Ein Computerprogrammprodukt, das ein Computerprogramm enthält mit Befehlen, deren Ausführung einen Prozessor veranlasst, das Verfahren gemäß einem der Ansprüche 1-20 durchzuführen.

**23.** Eine Vorrichtung zur Regelung der von einer Drehfeldmaschine (1) abgegebenen oder aufgenommenen Wirk- und Blindleistung in einem wicklungsfesten Koordinatensystem, mit einem ersten Regler (46-1) zur Erzeugung einer ersten Reglerausgangsgröße bei Sollgrößenabweichungen der Wirkleistung, mit einem zweiten Regler (46-2) zur Erzeugung einer zweiten Reglerausgangsgröße bei Sollgrößenabweichungen der Blindleistung, und mit Mitteln (44, 45-3, 45-4) zur Beaufschlagung der ersten und zweiten Reglerausgangsgröße mit jeweiligen Rückkopplungsgrößen, die sich als Funktionen aus mindestens einer zeitveränderlichen Systemgröße der Drehfeldmaschine ergeben, **dadurch gekennzeichnet, dass** die Vorrichtung Mittel (47) zur Bestimmung einer Spannung oder eines Stroms der Drehfeldmaschine als Stellgröße aus zumindest den mit den Rückkopplungsgrößen beaufschlagten ersten und zweiten Reglerausgangsgrößen umfasst, wobei als Zustandsvariablen, die der Regelung zugrunde liegen, direkt die Wirk- und Blindleistung gewählt werden, welche Mittel (47) keinen weiteren unterlagerten Regelkreis aufweisen und über die Mittel zur Beaufschlagung der ersten und zweiten Reglerausgangsgrößen mit Rückkopplungsgrößen durch die Wahl der Rückkopplungsgrößen die Blind- und die Wirkleistung zumindest teilweise entkoppelbar sind.

**24.** Die Vorrichtung nach Anspruch 23, **dadurch gekennzeichnet, dass** die Regler (46-1, 46-2) lineare Regler sind.

**25.** Die Vorrichtung nach einem der Ansprüche 23-24, **dadurch gekennzeichnet, dass** die Regler (46-1, 46-2) PI-Regler sind.

**26.** Die Vorrichtung nach einem der Ansprüche 23-25, **dadurch gekennzeichnet, dass** das Mittel (47) zur Bestimmung einer Spannung oder eines Stroms der Drehfeldmaschine (1) eine Rotorspannung als Stellgröße bestimmt.

**27.** Die Vorrichtung nach einem der Ansprüche 23-25, **dadurch gekennzeichnet, dass** das Mittel (47) zur Bestimmung einer Spannung oder eines Stroms der Drehfeldmaschine (1) eine Statorspannung als Stellgröße bestimmt.

**28.** Die Vorrichtung nach einem der Ansprüche 23-25, **dadurch gekennzeichnet, dass** das Mittel (47) zur Bestimmung einer Spannung oder eines Stroms der Drehfeldmaschine (1) einen Erregerstrom als Stellgröße bestimmt.

**29.** Die Vorrichtung nach einem der Ansprüche 23-28, **dadurch gekennzeichnet, dass** die Wirk- und Blindleistung des Stators (10) der Drehfeldmaschine (1) geregelt werden.

**30.** Die Vorrichtung nach einem der Ansprüche 23-28, **dadurch gekennzeichnet, dass** die Wirk- und Blindleistung des Netzes (3), an das die Drehfeldmaschine (1) angeschlossen ist, geregelt werden.

**31.** Die Vorrichtung nach einem der Ansprüche 23-30, **dadurch gekennzeichnet, dass** die Reglerausgangsgröße des ersten Reglers (46-1) mit einer Rückkopplungsgröße beaufschlagt wird, die dem Kreuzprodukt von Rotorspannung und Statorfluss der Drehfeldmaschine (1) entspricht, und dass die Reglerausgangsgröße des zweiten Reglers (46-2) mit einer Rückkopplungsgröße beaufschlagt wird, die dem Skalarprodukt von Rotorspannung und Statorfluss entspricht.

**32.** Die Vorrichtung nach einem der Ansprüche 23-31, **dadurch gekennzeichnet, dass** die Rückkopplungsgrößen Funktionen zumindest der Statorspannung, des Statorflusses, des Rotorstroms und der Rotordrehzahl sind.

**33.** Die Vorrichtung nach einem der Ansprüche 23-32, **dadurch gekennzeichnet, dass** die Rotorspannung der Drehfeldmaschine (1) als Stellgröße aus den mit den Rückkopplungsgrößen beaufschlagten ersten und zweiten Reglerausgangsgrößen und dem Statorfluss ohne weitere Regelung bestimmt wird.

**34.** Die Vorrichtung nach einem der Ansprüche 23-33, **dadurch gekennzeichnet, dass** die Vorrichtung Mittel zur Messung der Statorspannung und des Rotorstroms der Drehfeldmaschine (1) umfasst.

**35.** Die Vorrichtung nach einem der Ansprüche 23-34, **dadurch gekennzeichnet, dass** die Vorrichtung Mittel zur Messung des Statorstroms umfasst.

**36.** Die Vorrichtung nach einem der Ansprüche 23-35, **dadurch gekennzeichnet, dass** die Vorrichtung Mittel zur Messung (41, 42) der Rotordrehzahl der Drehfeldmaschine (1) oder zu deren Bestimmung (441) aus der Statorspannung, dem Statorstrom und dem Rotorstrom der Drehfeldmaschine umfasst.

**37.** Die Vorrichtung nach einem der Ansprüche 23-36, **dadurch gekennzeichnet, dass** die Vorrichtung Mittel zur Messung (41, 42) des Rotorlagewinkels der Drehfeldmaschine (1) oder zu dessen Bestimmung (441) aus der Statorspannung, dem Statorstrom und dem Rotorstrom der Drehfeldmaschine umfasst.

**38.** Die Vorrichtung nach einem der Ansprüche 34-37, **dadurch gekennzeichnet, dass** die Vorrichtung Mittel zur Messung der Spannungen und Ströme der Drehfeldmaschine (1) und zu deren Transformation (40-1, 40-2, 40-3, 40-4, 40-5) in ein zweiphasiges Koordinatensystem umfasst, und dass die Vorrichtung Mittel (40-6) zur Transformation der in einem zweiphasigen Koordinatensystem bestimmten Stellgröße in ein dreiphasiges Koordinatensystem umfasst.

**39.** Die Vorrichtung nach einem der Ansprüche 23-38, **dadurch gekennzeichnet, dass** die Drehfeldmaschine (1) eine doppeltgespeiste Asynchronmaschine ist, deren Stator (10) direkt mit einem Netz (3) verbunden ist, und deren Rotor (11) mit einem Umrichter (2) verbunden ist.

**40.** Eine Drehfeldmaschine (1) mit einer Vorrichtung zur Regelung der von der Drehfeldmaschine abgegebenen oder aufgenommenen Wirk- und Blindleistung in einem wicklungsfesten Koordinatensystem nach einem der Ansprüche 23-39.

**Claims**

**1.** A method for regulating the active and reactive power output or received by an induction machine (1) in a coordinate system fixed on the winding, with the steps of generating a first regulator output variable using a first regulator (46-1) as a function of a setpoint value deviation of the active power and a second regulator output variable using a second regulator (46-2) as a function of a setpoint value deviation of the reactive power, and charging the first and the second regulator output variables with respective feedback variables, which are functions of at least one time changeable system variable of the induction machine, **characterized in that** the active and reactive power are chosen directly as state variables, on which the regulation is based on wherein a voltage or a current of the induction machine is determined as a manipulated variable at least from the first and second regulator output variables, which have been charged with the feedback variables, without an additional subordinate control loop, the feedback variables being selected in such a way that the reactive and active powers are at least partially decoupled.

**2.** The method according to Claim 1, **characterized in that** the regulators (46-1, 46-2) are linear regulators.

**3.** The method according to one of Claims 1 through 2,

**characterized in that** the regulators (46-1, 46-2) are PI regulators.

4. The method according to one of Claims 1 through 3, **characterized in that** a rotor voltage of the induction machine (1) is determined as the manipulated variable.

5. The method according to one of Claims 1 through 3, **characterized in that** a stator voltage of the induction machine (1) is determined as the manipulated variable.

6. The method according to one of Claims 1 through 3, **characterized in that** an exciter current of the induction machine (1) is determined as the manipulated variable.

7. The method according to one of Claims 1 through 6, **characterized in that** the ohmic resistance of the stator of the induction machine (1) is neglected when calculating the feedback variables.

8. The method according to one of Claims 1 through 6, **characterized in that** a stationary state is assumed when calculating the feedback variables.

9. The method according to one of Claims 1 through 8, **characterized in that** the active and reactive power of the stator (10) of the induction machine (1) are regulated.

10. The method according to one of Claims 1 through 8, **characterized in that** the active and reactive power of the mains (3) to which the induction machine (1) is connected are regulated.

11. The method according to one of Claims 1 through 10, **characterized in that** the first regulator output variable is charged with a feedback variable which corresponds to the cross product of rotor voltage and stator flux of the induction machine, and the second regulator output variable is charged with a feedback variable which corresponds to the scalar product of rotor voltage and stator flux.

12. The method according to one of Claims 1 through 11, **characterized in that** the feedback variables are functions of at least the stator voltage, the stator flux, the rotor current, and the rotor speed.

13. The method according to one of Claims 1 through 12, **characterized in that** the rotor voltage of the induction machine is determined as manipulated variable, without further regulation, from the stator flux and the first and second regulator output variables charged with the feedback variables.

14. The method according to one of Claims 1 through 13, **characterized in that** at least the stator voltage and the rotor current of the induction machine (1) are measured.

15. The method according to one of Claims 1 through 14, **characterized in that** the stator current of the induction machine (1) is measured.

16. The method according to one of Claims 1 through 15, **characterized in that** the rotor speed of the induction machine (1) is measured or determined from the stator voltage, the stator current, and the rotor current of the induction machine.

17. The method according to one of Claims 1 through 16, **characterized in that** the rotor position angle of the induction machine (1) is measured or determined from the stator voltage, the stator current, and the rotor current of the induction machine.

18. The method according to one of Claims 1 through 17, **characterized in that** the stator flux of the induction machine (1) is calculated from the stator voltage and the angular frequency of the stator voltage of the induction machine.

19. The method according to one of Claims 14 through 18, **characterized in that** voltages and currents of the induction machine (1) are each measured and then transformed in a two-phase coordinate system, and the manipulated variable is determined in a two-phase coordinate system and then transformed in a three-phase coordinate system.

20. The method according to one of Claims 1 through 19, **characterized in that** the induction machine (1) is a double-fed asynchronous machine, whose stator (10) is directly connected to mains (3), and whose rotor (11) is connected to an inverter (2).

**EP 1 630 948 B1**

21. A computer program having commands whose execution causes a processor to perform the method according to one of Claims 1 through 20.

22. A computer program product containing a computer program having commands whose execution causes a processor to perform the method according to one of Claims 1 through 20.

23. A device for regulating the active and reactive power output or received by an induction machine (1) in a coordinate system fixed on the winding, having a first regulator (46-1) for generating a first regulator output variable in the event of setpoint variable deviations of the active power, having a second regulator (46-2) for generating a second regulator output variable in the event of setpoint variable deviations of the reactive power, and having means (44, 45-3, 45-4) for charging each of the first and second regulator output variables with feedback variables, which result as functions from at least one time changeable system variable of the induction machine, **characterized in that** the device comprises means (47), which do not have any further subordinate control loops, for determining a voltage or a current of the induction machine as a manipulated variable from at least the first and second regulator output variables charged with the feedback variables, wherein the active and reactive power are chosen directly as state variables on which the regulation is based on, and the active and reactive power are able to be at least partially decoupled via the means for charging the first and second regulator output variables with feedback variables through the selection of the feedback variables.

24. The device according to Claim 23, **characterized in that** the regulators (46-1, 46-2) are linear regulators.

25. The device according to one of Claims 23 through 24, **characterized in that** the regulators (46-1, 46-2) are PI regulators.

26. The device according to one of Claims 23 through 25, **characterized in that** the means (47) for determining a voltage or a current of the induction machine (1) determines a rotor voltage as the manipulated variable.

27. The device according to one of Claims 23 through 25, **characterized in that** the means (47) for determining a voltage or a current of the induction machine (1) determines a stator voltage as the manipulated variable.

28. The device according to one of Claims 23 through 25, **characterized in that** the means (47) for determining a voltage or a current of the induction machine (1) determines an exciter current as the manipulated variable.

29. The device according to one of Claims 23 through 28, **characterized in that** the active and reactive power of the stator (10) of the induction machine (1) are regulated.

30. The device according to one of Claims 23 through 28, **characterized in that** the active and reactive power of the mains (3) to which the induction machine (1) is connected are regulated.

31. The device according to one of Claims 23 through 30, **characterized in that** the regulator output variable of the first regulator (46-1) is charged with a feedback variable which corresponds to the cross product of rotor voltage and stator flux of the induction machine (1), and the regulator output variable of the second regulator (46-2) is charged with a feedback variable which corresponds to the scalar product of rotor voltage and stator flux.

32. The device according to one of Claims 23 through 31, **characterized in that** the feedback variables are functions of at least the stator voltage, the stator flux, the rotor current, and the rotor speed.

33. The device according to one of Claims 23 through 32, **characterized in that** the rotor voltage of the induction machine (1) is determined as the manipulated variable from the stator flux and the first and second regulator output variables charged with the feedback variables, without further regulation.

34. The device according to one of Claims 23 through 33, **characterized in that** the device comprises means for measuring the stator voltage and the rotor current of the induction machine (1).

35. The device according to one of Claims 23 through 34, **characterized in that** the device comprises means for measuring the stator current.

36. The device according to one of Claims 23 through 35, **characterized in that** the device comprises means for measuring (41, 42) the rotor speed of the induction machine (1) or for determining (441) it from the stator voltage, the stator current, and the rotor current of the induction machine.

37. The device according to one of Claims 23 through 36, **characterized in that** the device comprises means for measuring (41, 42) the rotor position angle of the induction machine (1) or for determining (441) it from the stator voltage, the stator current, and the rotor current of the induction machine.

38. The device according to one of Claims 34-37, **characterized in that** the device comprises means for measuring the voltages and currents of the induction machine (1) and for transforming (40-1, 40-2, 40-3, 40-4, 40-5) them in a two-phase coordinate system, and the device comprises means (40-6) for transforming the manipulated variable determined in a two-phase coordinate system in a three-phase coordinate system.

39. The device according to one of Claims 23 through 38, **characterized in that** the induction machine (1) is a double-fed asynchronous machine, whose stator (10) is connected directly to mains (3), and whose rotor (11) is connected to an inverter (2).

40. A induction machine (1) having a device for regulating the active power and reactive power output or received by the induction machine in a coordinate system fixed on the winding according to one of Claims 23 through 39.

## Revendications

1. Procédé de régulation de la puissance active ou de la puissance réactive délivrée ou absorbée par une machine (1) à champ tournant dans un système de coordonnées solidaire des enroulements, dans lequel, une première grandeur de sortie de régulation est formée dans un premier régulateur (46-1) en fonction d'un écart entre la puissance active et une grandeur de consigne et une deuxième grandeur de sortie de régulation est formée dans un deuxième régulateur (46-2) en fonction d'un écart entre la puissance réactive et une grandeur de consigne, des grandeurs de rétroaction qui sont des fonctions d'au moins une grandeur système variable dans le temps de la machine à champ tournant étant appliquées sur la première et la deuxième grandeur de sortie de régulation, **caractérisé en ce que**
comme variables d'état sur lesquelles la régulation est basée, on sélectionne directement la puissance active et la puissance réactive au moins à partir de la première et de la deuxième grandeur de sortie de régulation sur lesquelles sont appliquées les grandeurs de rétroaction sans faire intervenir de boucles de régulation supplémentaires, **en ce qu'**on détermine comme grandeurs de réglage une tension ou un courant de la machine à champ tournant et **en ce que** les grandeurs de rétroaction sont sélectionnées de manière à découpler au moins en partie la puissance réactive et la puissance active.

2. Procédé selon la revendication 1, **caractérisé en ce que** les régulateurs (46-1, 46-2) sont des régulateurs linéaires.

3. Procédé selon l'une des revendications 1 ou 2, **caractérisé en ce que** les régulateurs (46-1, 46-2) sont des régulateurs PI.

4. Procédé selon l'une des revendications 1 à 3, **caractérisé en ce que** comme grandeur de réglage, on détermine la tension aux bornes du rotor de la machine (1) à champ tournant.

5. Procédé selon l'une des revendications 1 à 3, **caractérisé en ce que** comme grandeur de réglage, on détermine la tension aux bornes du stator de la machine (1) à champ tournant.

6. Procédé selon l'une des revendications 1 à 3, **caractérisé en ce que** comme grandeur de réglage, on détermine le courant d'excitation de la machine (1) à champ tournant.

7. Procédé selon l'une des revendications 1 à 6, **caractérisé en ce que** lors du calcul des grandeurs de rétroaction, on néglige la résistance ohmique du stator de la machine (1) à champ tournant.

8. Procédé selon l'une des revendications 1 à 6, **caractérisé en ce que** lors du calcul des grandeurs de rétroaction, on part d'un état stationnaire.

9. Procédé selon l'une des revendications 1 à 8, **caractérisé en ce que** l'on régule la puissance active et la puissance réactive du stator (10) de la machine (1) à champ tournant.

10. Procédé selon l'une des revendications 1 à 8, **caractérisé en ce que** l'on régule la puissance active et la puissance réactive du réseau (3) auquel la machine (1) à champ tournant est raccordée.

11. Procédé selon l'une des revendications 1 à 10, **caractérisé en ce qu'**une grandeur de rétroaction qui correspond au produit vectoriel de la tension aux bornes du rotor et du flux dans le stator de la machine à champ tournant est appliquée sur la première grandeur de sortie de régulation et **en ce qu'**une grandeur de rétroaction qui correspond au produit scalaire de la tension aux bornes du rotor et du flux dans le stator est appliquée sur la deuxième grandeur de sortie de régulation.

12. Procédé selon l'une des revendications 1 à 11, **caractérisé en ce que** les grandeurs de rétroaction sont des fonctions d'au moins la tension aux bornes du stator, le flux dans le stator, le courant dans le rotor et la vitesse de rotation du rotor.

13. Procédé selon l'une des revendications 1 à 12, **caractérisé en ce que** la tension aux bornes du rotor de la machine à champ tournant est déterminée comme grandeur de réglage sans autre régulation à partir de la première et de la deuxième grandeur de sortie de régulation sur lesquelles sont appliquées les grandeurs de rétroaction et le flux dans le stator.

14. Procédé selon l'une des revendications 1 à 13, **caractérisé en ce que** l'on mesure au moins la tension aux bornes du stator et le courant dans le rotor de la machine (1) à champ tournant.

15. Procédé selon l'une des revendications 1 à 14, **caractérisé en ce que** le courant dans le stator de la machine (1) à champ tournant est mesuré.

16. Procédé selon l'une des revendications 1 à 15, **caractérisé en ce que** la vitesse de rotation de la machine (1) à champ tournant est mesurée ou est déterminée à partir de la tension aux bornes du stator, du courant dans le stator et du courant dans le rotor de la machine à champ tournant.

17. Procédé selon l'une des revendications 1 à 16, **caractérisé en ce que** la position angulaire du rotor de la machine (1) à champ tournant est mesurée ou est déterminée à partir de la tension aux bornes du stator, du courant dans le stator et du courant dans le rotor de la machine à champ tournant.

18. Procédé selon l'une des revendications 1 à 17, **caractérisé en ce que** le flux dans le stator de la machine (1) à champ tournant est calculé à partir de la tension aux bornes du stator et de la vitesse angulaire de la tension aux bornes du stator de la machine à champ tournant.

19. Procédé selon l'une des revendications 14 à 18, **caractérisé en ce que** l'on mesure les tensions et les courants de la machine (1) à champ tournant pour ensuite les convertir dans un système de coordonnées à deux phases et **en ce que** la grandeur de réglage est déterminée dans un système de coordonnées à deux phases et est ensuite convertie en un système de coordonnées à trois phases.

20. Procédé selon l'une des revendications 1 à 19, **caractérisé en ce que** la machine (1) à champ tournant est une machine asynchrone à double alimentation dont le stator (10) est relié directement à un réseau (3) et dont le rotor (11) est relié à un convertisseur (2).

21. Programme informatique qui délivre des ordres dont l'exécution amène un processeur à exécuter le procédé selon l'une des revendications 1 à 20.

22. Produit de programme informatique qui comprend un programme informatique qui délivre des ordres dont l'exécution amène un processeur à exécuter le procédé selon l'une des revendications 1 à 20.

23. Dispositif de régulation de la puissance active et de la puissance réactive délivrée ou absorbée par une machine (1) à champ tournant dans un système de coordonnées solidaire des enroulements, qui présente un premier régulateur (46-1) qui forme une première grandeur de sortie de régulation en cas d'écart entre la puissance active et une grandeur de consigne, un deuxième régulateur (46-2) qui forme une deuxième grandeur de sortie de régulation en cas d'écart entre la puissance réactive et une valeur de consigne et des moyens (44, 45-3, 45-4) qui appliquent sur la première et la deuxième grandeur de sortie de régulation des grandeurs de rétroaction qui sont des fonctions d'au moins une grandeur système variable dans le temps de la machine à champ tournant,
**caractérisé en ce que**
le dispositif présente des moyens (47) de détermination d'une tension ou d'un courant de la machine à champ tournant comme grandeur de réglage à partir d'au moins la première et la deuxième grandeur de sortie de régulation sur lesquelles sont appliquées les grandeurs de rétroaction, les variables d'état sélectionnées comme base pour la régulation étant directement la puissance active et la puissance réactive, une autre boucle de régulation étant superposée aux moyens (47), et **en ce que** la puissance réactive et la puissance active peuvent être au moins en partie découplées par les moyens qui appliquent les grandeurs de rétroaction sur la première et la deuxième grandeur de sortie du régulateur par la sélection des grandeurs de rétroaction.

24. Dispositif selon la revendication 23, **caractérisé en ce que** les régulateurs (46-1, 46-2) sont des régulateurs linéaires.

25. Dispositif selon l'une des revendications 23 à 24, les régulateurs (46-1, 46-2) sont des régulateurs PI.

26. Dispositif selon l'une des revendications 23 à 25, **caractérisé en ce que** les moyens (47) de détermination d'une tension ou d'un courant de la machine (1) à champ tournant déterminent comme grandeur de réglage la tension aux bornes du rotor.

27. Dispositif selon l'une des revendications 23 à 25, **caractérisé en ce que** les moyens (47) de détermination d'une tension ou d'un courant de la machine (1) à champ tournant déterminent comme grandeur de réglage la tension aux bornes du stator.

28. Dispositif selon l'une des revendications 23 à 25, **caractérisé en ce que** les moyens (47) de détermination d'une tension ou d'un courant de la machine (1) à champ tournant déterminent comme grandeur de réglage un courant d'excitation.

29. Dispositif selon l'une des revendications 23 à 28, **caractérisé en ce que** la puissance active et la puissance réactive du réseau (3) auquel la machine (1) à champ tournant est raccordée sont régulées.

30. Dispositif selon l'une des revendications 23 à 28, la puissance active et la puissance réactive du réseau (3) auquel la machine (1) à champ tournant est raccordée sont régulées.

31. Dispositif selon l'une des revendications 23 à 30, **caractérisé en ce qu'**une grandeur de rétroaction qui correspond au produit vectoriel de la tension aux bornes du rotor et du flux dans le stator de la machine (1) à champ tournant est appliquée sur la première grandeur de sortie de régulation et **en ce qu'**une grandeur de rétroaction qui correspond au produit scalaire de la tension aux bornes du rotor et du flux dans le stator est appliquée sur la deuxième grandeur de sortie de régulation.

32. Dispositif selon l'une des revendications 23 à 31**, caractérisé en ce que** les grandeurs de rétroaction sont des fonctions d'au moins la tension aux bornes du stator, le flux dans le stator, le courant dans le rotor et la vitesse de rotation du rotor.

33. Dispositif selon l'une des revendications 23 à 32, **caractérisé en ce que** la tension aux bornes du rotor de la machine (1) à champ tournant est déterminée comme grandeur de réglage sans autre régulation à partir de la première et de la deuxième grandeur de sortie de régulation sur lesquelles sont appliquées les grandeurs de rétroaction et le flux dans le stator.

34. Dispositif selon l'une des revendications 23 à 33, **caractérisé en ce que** le dispositif comprend des moyens de mesure de la tension aux bornes du stator et du courant dans le rotor de la machine (1) à champ tournant.

35. Dispositif selon l'une des revendications 23 à 24, **caractérisé en ce que** le dispositif présente des moyens de mesure du courant dans le stator.

36. Dispositif selon l'une des revendications 23 à 35, **caractérisé en ce que** le dispositif comprend des moyens (41, 42) de mesure de la vitesse de rotation de la machine (1) à champ tournant ou qui permettent de la déterminer (441) à partir de la tension aux bornes du stator, du courant dans le stator et du courant dans le rotor de la machine à champ tournant.

**37.** Dispositif selon l'une des revendications 23 à 36, **caractérisé en ce que** le dispositif comprend des moyens (41, 42) de mesure de la position angulaire du rotor de la machine (1) à champ tournant ou des moyens qui permettent de la déterminer (441) à partir de la tension aux bornes du stator, du courant dans le stator et du courant dans le rotor de la machine à champ tournant.

**38.** Dispositif selon l'une des revendications 34 à 37, **caractérisé en ce que** le dispositif comprend des moyens qui mesurent les tensions et les courants dans la machine (1) à champ tournant et qui les convertissent (40-1, 40-2, 40-3, 40-4, 40-5) en un système de coordonnées à deux phases et **en ce que** le dispositif présente des moyens (40-6) qui convertissent en un système de coordonnées à trois phases les grandeurs de réglage définies dans un système de coordonnées à deux phases.

**39.** Dispositif selon l'une des revendications 23 à 38, **caractérisé en ce que** la machine (1) à champ tournant est une machine asynchrone à double alimentation dont le stator (10) est relié directement à un réseau (3) et dont le rotor (11) est relié à un convertisseur (2).

**40.** Machine (1) à champ tournant dotée d'un dispositif de régulation de la puissance active et de la puissance réactive délivrée ou absorbée par la machine à champ tournant dans un système de coordonnées solidaire des enroulements selon l'une des revendications 23 à 39.

Fig.1  Stand der Technik

Fig.2

Fig.3

EP 1 630 948 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0043973 A1

**In der Beschreibung aufgeführte Nicht-Patentliteratur**

- **KRZEMINSKI.** *Sensorless Multiscalar Control of Double Fed Machine for Wind Power Generators,* 2002